(19) Europäisches Patentamt
European Patent Office
Office européen des brevets

(11) EP 1 830 320 A1

(12) EUROPEAN PATENT APPLICATION
published in accordance with Art. 158(3) EPC

(43) Date of publication:
05.09.2007 Bulletin 2007/36

(51) Int Cl.:
$G06T\ 5/00^{(2006.01)}$  $G06T\ 1/00^{(2006.01)}$
$G06T\ 7/20^{(2006.01)}$

(21) Application number: 05820128.6

(22) Date of filing: 22.12.2005

(86) International application number:
PCT/JP2005/023595

(87) International publication number:
WO 2006/068223 (29.06.2006 Gazette 2006/26)

(84) Designated Contracting States:
DE FR

(30) Priority: 24.12.2004 JP 2004373452
31.03.2005 JP 2005101273

(71) Applicants:
• National University Corporation
Yokohama National University
Kanagawa 240-8501 (JP)
• FUJI JUKOGYO KABUSHIKI KAISHA
Tokyo 160-8316 (JP)

(72) Inventors:
• NAGAO, Tomoharu
National University Co. Yokohama Nat.
Yokohama-shi, Kanagawa; 2408501 (JP)

• YOKOI, Wataru
National University Co. Yokohama Nat
Yokohama-shi, Kanagawa; 2408501 (JP)
• OGAWA, Genya
c/o Fuji Jukogyo Kabushiki Kaisha
Tokyo; 16083106 (JP)
• TORII, Tsuyoshi
c/o Fuji Jukogyo Kabushiki Kaisha
Tokyo; 1608316 (JP)
• KISE, Katsuyuki
c/o Fuji Jukogyo Kabushiki Kaisha
Tokyo; 1608316 (JP)

(74) Representative: Sajda, Wolf E. et al
Meissner, Bolte & Partner GbR
Postfach 86 06 24
81633 München (DE)

(54) **IMAGE PROCESSOR**

(57) An image processor (1) for subjecting an image picked up by an imaging apparatus (21) to image processing to extract a specific object from the image, the image processor comprising: an image processing section (3) which subjects a plurality kinds of images (t, t-1, ..., t-k) picked up by the imaging apparatus to the image processing based on a processing program comprising image filters (F) combined in a form of a tree structure, and which forms an output image (O) in which the specific object is extracted.

*FIG.1*

EP 1 830 320 A1

**Description**

Technical Field

The present invention relates to an image processor, and more particularly, to an image processor capable of extracting a specific object from an image.

Background Art

In recent years, researches of an image processor and an image processing method are heavily conducted for picking up a subject or a landscape by means of image inputting means such as a TV camera and a CCD camera, and subjecting the obtained dynamic image to image processing, thereby extracting a specific object, e.g., an object moving in an environment or the movement from the image (e.g., see patent documents 1 to 5).

In a field of an automobile, such an image processor is used for picking up a forward landscape by a CCD camera or the like mounted on a vehicle to extract a pedestrian or other vehicle from the dynamic image, thereby avoiding an accident such as collision against it (see the patent documents 1 to 3). In a filed of an artificial intelligent robot, the image processor is used in such a manner that the robot found another moving object while observing an in a filed of an automobile by means of a mounted camera, the moving object is measured, and action of the robot against the moving object is determined (see the patent document 4), and researches of the image processor are conducted and they are put into actual use.

To extract a specific object from the dynamic image, such an image processor employs an image processing method in which an input image is obtained by two CCD cameras which are separated from each other in the horizontal direction, the obtained input image is subjected to the image processing to extract a contour of the specific object, or an image processing method in which an optical flow is calculated from the input image to extract the specific object, or an image processing method in which the input image is checked against models registered in a database by pattern matching processing to extract a specific object.

However, these methods need much labor is usually required for constructing a processing program, and such processing program must be constructed for each of target specific object. Thus, image processing methods and image processors capable of easily constructing a processing program and obtaining a general processing program are desired.

In a field of an image processing of a static image, in recent years, there is proposed an image processing technique (ACTTIT) in which an input image I is subjected to image processing based on a processing program in which various image filters F are combined in tree structure as shown in FIG. 41 (see non-patent document 1).

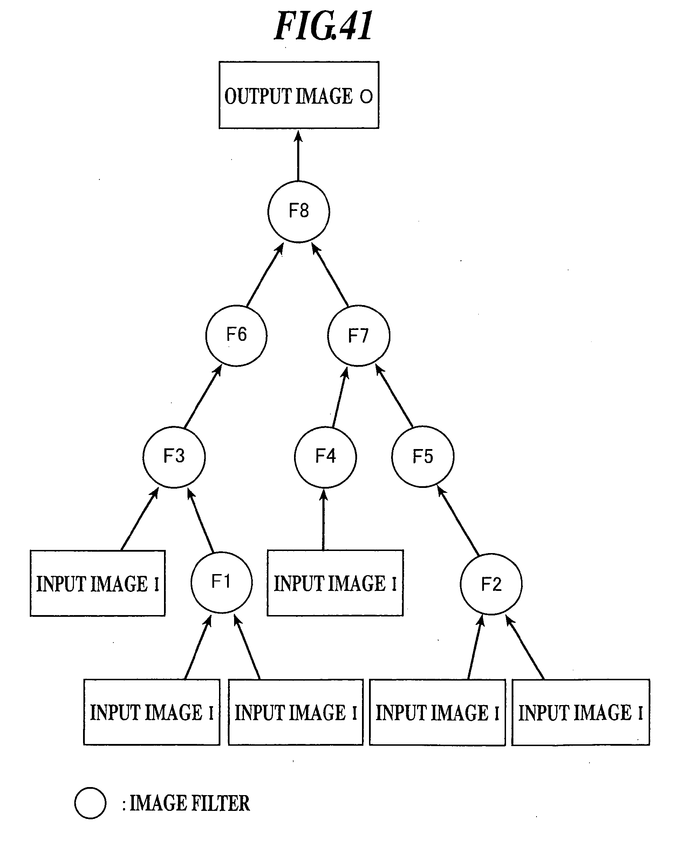

More specifically, in the image processing technique, a document input image I comprising printed characters and manually written characters is subjected to the image processing by a processing program as shown in FIG. 41, and only an output image O in which only printed characters are extracted is output, only a mesh pattern around a boundary between cells is extracted from a microscope image in which a plurality of cornea endothelial cells are connected to one another to obtain the output image.

In the non-patent document 1, it is proposed to employ a technique of a genetic programming (GP, hereinafter) to automatically optimize the combination of the various image filters F. This automatic constructing method of the image conversion is called ACTIT (Automatic Construction of Tree-structural Image Transformations) hereinafter.

Patent Document 1: Japanese Patent Application Publication Laid-open No.H5-265 547
Patent Document 2: Japanese Patent Application Publication Laid-open No.H10-011 585
Patent Document 3: Japanese Patent Application Publication Laid-open No.2002-083 297
Patent Document 4: Japanese Patent Application Publication Laid-open No.2001-084 383
Patent Document 5: Japanese Patent Application Publication Laid-open No.H9-271 014

Non-patent Document 1: written by Shinya AOKI and one other, "Automatic Construction of Tree-structural Image Transformations ACTIT of Tree-structural Image Transformation)", the Institute of Image Information and Television Engineers research paper, the Institute of Image Information and Television Engineers, 1999, vol.53, 6th issue, pp. 888 to 894.

Disclosure of the Invention

Problem to be Solved by the Invention

Hence, it is expected that the image processing technique described in the non-patent document 1 is applied to the object for extracting a specific object such as a moving object from the dynamic image.

However, this image processing technique is for subjecting a static image to the image processing as described above and more specifically, the same static image must be input repeatedly for the "input image I" of the processing program shown in FIG. 41. Thus, the ACTIT method must be modified so that it can also be applied to a dynamic image.

If an optical flow technique capable of extracting a moving direction or a moving distance of each point on a moving object from an image can be combined in the ACTIT method, it is expected that the optical flow technique effectively functions when an object which moves in the image can be extracted from a dynamic image, and it is expected that the precision of extraction is enhanced.

Hence, it is an object of the present invention to provide an image processor capable of expanding the image processing technique ACTIT so that the same image processing technique can be applied to a dynamic image, capable of extracting a specific object from the dynamic image based on a processing program comprising various image filters which are combined in a tree structure, and capable of extracting a specific object having time variation or displacement. It is also an object of the invention to provide a general image processor capable of easily obtaining such a processing program.

It is another object of the invention to provide an image processor capable of employing an optical flow technique in the ACTIT technique which can automatically optimize a processing program comprising various image filters which are combined in a tree structure to that a moving object can precisely be extracted from a dynamic image.

Means for Solving the Problem

To solve the above problem; according to an invention described in claim 1, an image processor in which an image picked by an imaging apparatus is subjected to image processing to extract a specific object, the image processor comprising

an image processing section which subjects a plurality of images picked up by the imaging apparatus to the image processing based on a processing program in which image filters are combined in a tree structure, and which forms an output image from which the specific object is extracted, wherein

the plurality of images are a plurality kinds of images constituting a plurality of dynamic images picked up by the imaging apparatus at time intervals from each other.

According to the invention described in claim 1, a configuration of the processing program of the tree structure processed by the image processing section of the image processor does not have only the same static image as a terminal symbol unlike the conventional technique, but has a processing program of tree structure in which a plurality kinds of images are terminal symbols.

It is preferable that the image processor includes a processing program forming section for forming the processing program, the processing program forming section forms the processing program by genetic programming using the plurality kinds of images, a target image and a weight image.

The weight image is set such that a ratio of a weight of its extraction region and a weight of a non-extraction region becomes equal to a ratio of a reciprocal of an area ratio of the extraction region and the non-extraction region.

It is preferable that the processing program forming section forms the processing program using a plurality of learning sets comprising the plurality kinds of images, the target image and the weight image.

It is preferable that a fitness used for the genetic programming in the processing program forming section is calculated such that a value of the fitness is smaller as the number of nodes is greater.

It is preferable that the ratio of the number of nodes to the fitness is varied in accordance with the number of generations in the process of evolution in the genetic programming.

It is preferable that a value of a fitness used for genetic programming in the processing program forming section is greater as the number of nodes of a two-input image filter in the processing program is greater.

It is preferable that the ratio of the number of nodes of the two-input image filter to the fitness is varied in accordance with the number of generations in the process of evolution in the genetic programming.

It is preferable that the processing program is formed by combining a plurality of processing programs.

It is preferable that an output image is formed by non-linear superposition of processing by the plurality of processing programs.

It is preferable that a mask filter is included in the image filter.

It is preferable that the image processor includes a display section for displaying an image, and the output image formed by the processing program is displayed such that the output image is superposed on the input image displayed on the display section.

It is preferable that the image processing section subjects a plurality of images constituting a dynamic image picked up by the imaging apparatus and an optical flow image produced by these images to the image processing based on the processing program in which the image filters are combined in the tree structure.

It is preferable that the image processor includes a processing program forming section for forming the processing program, the processing program forming section outputs a processing program which is optimized by genetic programming using the plurality of images, the optical flow image, the target image and the weight image.

It is preferable that the image processing section respectively converts the plurality of images picked up by the imaging apparatus into images viewed from above in a pseudo manner.

It is preferable that the image processing section inputs the plurality of converted images and the optical flow image produced based on the plurality of converted images to the processing program.

It is preferable that the processing program forming section carries out learning by the genetic programming using the plurality of converted images, the optical flow image produced based on the plurality of converted images, the target image and the weight image, and outputs the optimized processing program.

It is preferable that the optical flow image is an image expressing information of size of calculated flow in terms of a gradation value.

It is preferable that the optical flow image is an image expressing information of direction of calculated flow in terms of a gradation value.

It is preferable that the flow in the optical flow image is a flow with respect to a moving plane of the imaging apparatus converted based on a moving state of the imaging apparatus.

It is preferable that in the optical flow image, a gradation value of a picture element portion where reliability of calculated flow is low is set to zero.

It is preferable that the plurality of images are respectively converted into a state where a vantage point is moved upward with respect to the plurality of imaged picked up by the imaging apparatus.

According to the invention described in claim 1, a configuration of the processing program of the tree structure processed by the image processing section of the image processor does not have only the same static image as a terminal symbol unlike the conventional technique, but has a processing program of tree structure in which a plurality kinds of images are terminal symbols. Therefore, the image processing technique of the conventional ACTIT (see the non-patent document 1) can be expanded, and the ACTIT technique can be applied also to dynamic images in which frames have different images.

Images which are simultaneously input are compared with each other and difference processing is carried out or logical product processing is carried out. With this, image processing in which factors such as positional deviation of a specific object between the images is taken into account can be carried out, and it is possible to extract a specific object having time variation or special displacement in the image.

If the image processor includes an image processing section which subjects a plurality of images constituting a dynamic image picked up by the imaging apparatus and an optical flow image produced from these images to the image processing in accordance with a processing program in which various image filters are combined in tree structure, and which forms an output image from which a specific object is extracted, the ACTIT technique capable of inputting the same static image to the tree structure processing program and effectively extracting the specific object from the image can be expanded such that a plurality of images which have substantially the same total structure in the images and the optical flow image produced from these images to the tree structure processing program, and the specific object is extracted from the image constituting the dynamic image.

Especially, as an image which is to be input to the processing program, the optical flow image produced from the plurality of images constituting the dynamic image is input. With this, a region on the image corresponding to the moving object indicative of peculiar flow in the dynamic image can be clearly pointed in the processing program. Thus, when a specific object extracted from the dynamic image is a moving object, the image processor of the present invention can reliably and precisely extract the moving object.

Brief Description of the Drawings

FIG. 1       is a block diagram showing a structure of an image processor a First Embodiment;
FIG. 2       is a diagram used for explaining a processing program of the First Embodiment;
FIG. 3A     is a diagram used for explaining a method for selecting continuous four frames to be input to the processing program;
FIG. 3B     is a diagram used for explaining a method for selecting input images of four frames every three frames to be input to the processing program;
FIG. 4A     is a diagram used for explaining an input image t of continuous four frames;
FIG. 4B     is a diagram used for explaining an input image t-3 of continuous four frames;
FIG. 5       is a diagram used for explaining an output image based on the input image shown in FIGS. 4A and 4B;
FIG. 6       is a diagram showing that the input image of FIG. 4A and the output image of FIG. 5 are superposed on each other and displayed;
FIG. 7A     is a diagram showing an example of a mask filter used in the First Embodiment;

FIG. 7B    is a diagram showing the example of the mask filter used in the First Embodiment;

FIG. 7C    is a diagram showing the example of the mask filter used in the First Embodiment;

FIG. 7D    is a diagram showing the example of the mask filter used in the First Embodiment;

FIG. 7E    is a diagram showing the example of the mask filter used in the First Embodiment;

FIG. 7F    is a diagram showing the example of the mask filter used in the First Embodiment;

FIG. 8    is a block diagram showing a structure of a processing program forming section of the First Embodiment;

FIG. 9    is a diagram used for explaining a target image used by fitness evaluating means;

FIG. 10    is a diagram used for explaining a weight image used by the fitness evaluating means;

FIG. 11    is a diagram used for explaining three learning sets used in the First Embodiment;

FIG. 12A    is a diagram showing an input image used by a second learning set shown in FIG. 11;

FIG. 12B    is a diagram showing an input image used by a third learning set shown in FIG. 11;

FIG. 13    is a diagram used for explaining cross of the processing program in cross means;

FIG. 14    is a diagram used for explaining a large scale processing program formed by combining processing programs;

FIG. 15    is a diagram used for explaining the large scale processing program which displays an image in a divided manner using the mask filter;

FIG. 16    is a diagram showing one example of the processing program formed by genetic programming;

FIG. 17A    is a diagram showing a state in which a person is extracted from an input image which is not used for the learning set;

FIG. 17B    is a diagram showing the state in which a person is extracted from the input image which is not used for the learning set;

FIG. 18    is a block diagram showing a structure of an image processor according to a Second Embodiment;

FIG. 19    is a diagram showing an input image picked up by an imaging apparatus;

FIG. 20    is a diagram used for explaining a structure of a processing program of the Second Embodiment;

FIG. 21    is a diagram used for explaining a method for selecting input images to be input to the processing program of the Second Embodiment;

FIG. 22    is a diagram used for explaining matching processing;

FIG. 23    is a diagram showing an optical flow image;

FIG. 24    is a diagram showing the output image by the processing program;

FIG. 25    is a diagram showing that the input image and the output image FIG. 5 are superposed on each other and displayed;

FIG. 26    is a diagram used for explaining a target image used by fitness evaluating means;

FIG. 27    is a diagram used for explaining a weight image used by the fitness evaluating means;

FIG. 28    is a diagram showing one example of a processing program formed by genetic programming;

FIG. 29    is a diagram showing a result that a processing program is applied to a non-learned dynamic image;

FIG. 30    is a graph showing a difference of variation in fitness with respect to the number of generation when the optical flow image is used as the input image of the processing program and when the optical flow image is not used;

FIG. 31    is a diagram used for explaining a principle for converting an input image into an image as viewed from above in a pseudo manner in a Third Embodiment;

FIG. 32    is a diagram showing a converted imaged which is converted from the input image of FIG. 19 and formed;

FIG. 33    is a diagram showing an optical flow image produced by the converted image;

FIG. 34    is a diagram showing an output image obtained by reversely converting the image which is output in the Third Embodiment;

FIG. 35    is a diagram showing an image which is displayed in such a manner that an output image and an original input image are superposed on each other;

FIG. 36    is a diagram used for explaining a target image used in the Third Embodiment;

FIG. 37    is a diagram used for explaining a weight image used in the Third Embodiment;

FIG. 38    is a diagram showing a result that a processing program formed in the Third Embodiment is applied to a non-learned dynamic image;

FIG. 39    is a graph showing transition of the fitness in the process of evolution of the processing program;

FIG. 40A    is a diagram used for explaining the conversion of flow vector by flow based on a running state of a subject vehicle for a stationary object;

FIG. 40B    is a diagram used for explaining the conversion of flow vector by flow based on a running state of the subject vehicle for a moving object; and

FIG. 41    is a diagram used for explaining a structure of a conventional processing program;

Best Mode for Carrying Out the Invention

Embodiments of an image processor of the present invention will be explained with reference to the drawings.

First Embodiment

In the embodiment, an image processor which is mounted on a vehicle and which extracts a pedestrian from a forward landscape image of a vehicle will be explained.

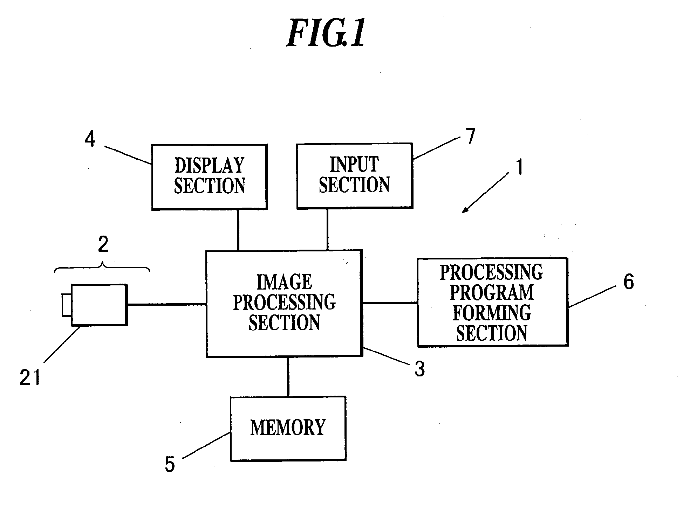

FIG. 1 is a block diagram showing a structure of the image processor of the embodiment. The image processor 1 includes an image input section 2, an image processing section 3, a display section 4, a memory 5, a processing program forming section 6 and an input section 7. In this embodiment, as the image processor 1, it is possible to use a computer comprising a CPU, a RAM, a ROM, an I/O interface which are connected to one another through buses.

The image input section 2 includes an imaging apparatus 21 capable of converting a picked up image into an electric signal. A CCD camera using a solid-state image sensing device such as a charge-coupled device (CCD) is used as the imaging apparatus 21. In this embodiment, the imaging apparatus 21 of the image input section 2 is mounted on an inner side of a front glass near a room mirror of the vehicle (not shown) such that a front side of the imaging apparatus 21 can pick up an image. Like a normal television image, the imaging apparatus 21 picks up an image of a front of the vehicle every 1/30 seconds and sends the input image to the image processing section 3.

In this embodiment, a unit of the input image sent at constant time intervals is called one frame. That is, in this embodiment, input images of 30 frames are sent to the image processing section 3 from the image input section 2 for one second.

The display section 4 having a monitor and the memory 5 are connected to the image processing section 3. The image processing section 3 sends, to the display section 4, an input image sent from the image input section 2, and displays the same on the monitor and at the same time, the image processing section 3 temporarily stores the input image in the memory 5 in succession.

A processing program in which various image filters are combined in tree structure is stored in the image processing section 3. The image processing section 3 carries out image processing in accordance with the processing program to form an output image.

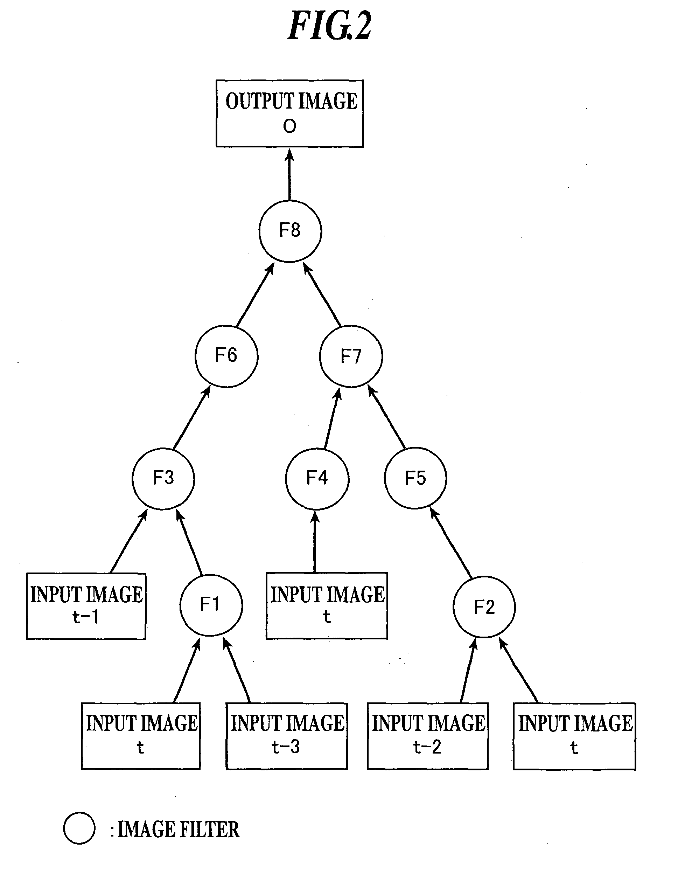

Here, a structure of the processing program will be explained. As shown in FIG. 2, the various image filters F shown in the following Table 1 are combined in the tree structure in the processing program. A plurality kinds of input images t, t-1, ..., t-k (k is an integer not less than 1), i.e., k+1 different input images t, t-1, ..., t-k are subjected to the image processing by each image filter F, and an output image O is formed.

Table 1

| NAME OF FILTER | SYMBOL | CONTENTS OF PROCESSING |
|---|---|---|
| AVERAGE VALUE FILTER | - | OBTAIN AVERAGE VALUE OF 3x3 PICTURE ELEMENTS |
| MINIMUM VALUE FILTER | m | OBTAIN MINIMUM VALUE OF 3x3 PICTURE ELEMENTS |
| MAXIMUM VALUE FILTER | M | OBTAIN MAXIMUM VALUE OF $3\times3$ PICTURE ELEMENTS |
| SOBEL FILTER | d | OBTAIN SOBEL OF $3\times3$ PICTURE ELEMENTS |
| LAPLACIAN FILTER | / | OBTAIN LAPLACIAN OF $3\times3$ PICTURE ELEMENTS |
| WIDE REGION FILTER | S | REMAIN ONLY WIDE REGION GROUP AFTER GROUPING |
| NARROW REGION FILTER | s | REMAIN ONLY NARROW REGION GROUP AFTER GROUPING |
| HIGH CHARGING RATE FILTER | P | REMAIN GROUP HAVING HIGH CHARGING RATE AFTER GROUPING |
| LOW CHARGING RATE FILTER | P | REMAIN GROUP HAVING LOW CHARGING RATE AFTER GROUPING |

(continued)

| NAME OF FILTER | SYMBOL | CONTENTS OF PROCESSING |
|---|---|---|
| SQUARE DEGREE FILTER | R | REMAIN GROUP HAVING HIGH SQUARE DEGREE AFTER GROUPING |
| RECTANGULAR DEGREE FILTER | r | REMAIN GROUP HAVING LOW SQUARE DEGREE AFTER GROUPING |
| CIRCULAR DEGREE FILTER | C | REMAIN GROUP HAVING HIGH CIRCULAR DEGREE AFTER GROUPING |
| NON-CIRCULAR DEGREE FILTER | c | REMAIN GROUP HAVING LOW CIRCULAR DEGREE AFTER GROUPING |
| SYMMETRY FILTER | Q | REMAIN GROUP HAVING HIGH SYMMETRY DEGREE AFTER GROUPING |
| NON-SYMMETRY FILTER | q | REMAIN GROUP HAVING LOW SYMMETRY DEGREE AFTER GROUPING |
| REVERSE FILTER | i | REVERSE BRIGHTNESS VALUE |
| LINEAR CONVERSION FILTER | H | CONVERT BRIGHTNESS LINEAR |
| GAMMA FILTER | G | CORRECT GAMMA OF BRIGHTNESS VALUE |
| BINARY FILTER | N | BINARIZE BY MEANS OF THRESHOLD VALUE |
| EXPANSION FILTER | > | EXPAND AFTER BINARIZATION |
| CONTRACTION FILTER | < | CONTRACT AFTER BINARIZATION |
| WHITE PICTURE ELEMENT EXTRACTION FILTER | T | BRIGHTNESS LOWER THAN THRESHOLD VALUE IS 0, HIGH BRIGHTNESS IS CONVERTED AS IT IS |
| BLACK PICTURE ELEMENT EXTRACTION FILTER | t | BRIGHTNESS HIGHER THAN THRESHOLD VALUE IS 0, LOW BRIGHTNESS IS CONVERTED AS IT IS |
| WHITE EDGE EXTRACTION FILTER | E | EXTRACT ONLY POSITIVE EDGE BY LAPLACIAN FILTER |
| BLACK EDGE EXTRACTION FILTER | e | EXTRACT ONLY NEGATIVE EDGE BY LAPLACIAN FILTER |
| SOLID FILTER | h | BRIGHTNESS VALUE OF ENTIRE IMAGE IS SET TO CERTAIN VALUE |
| LOGICAL SUM FILTER (TWO INPUTS) | L | OBTAIN LOGICAL SUM OF TWO IMAGES |
| LOGICAL PRODUCT FILTER (TWO INPUTS) | 1 | OBTAIN LOGICAL PRODUCT OF TWO IMAGES |
| ALGEBRAIC SUM FILTER (TWO INPUTS) | A | OBTAIN ALGEBRAIC SUM OF TWO IMAGES |
| ALGEBRAIC PRODUCT FILTER (TWO INPUTS) | a | OBTAIN ALGEBRAIC PRODUCT OF TWO IMAGES |
| LIMIT SUM FILTER (TWO INPUTS) | B | OBTAIN LIMIT SUM OF TWO IMAGES |
| LIMIT PRODUCT FILTER (TWO INPUTS) | b | OBTAIN LIMIT PRODUCT OF TWO IMAGES |
| DRASTIC SUM FILTER (TWO INPUTS) | U | OBTAIN DRASTIC SUM OF TWO IMAGES |
| DRASTIC PRODUCT FILTER (TWO INPUTS) | u | OBTAIN DRASTIC PRODUCT OF TWO IMAGES |
| DIFFERENCE FILTER (TWO INPUTS) | D | OBTAIN ABSOLUTE VALUE OF DIFFERENCE OF TWO IMAGES |

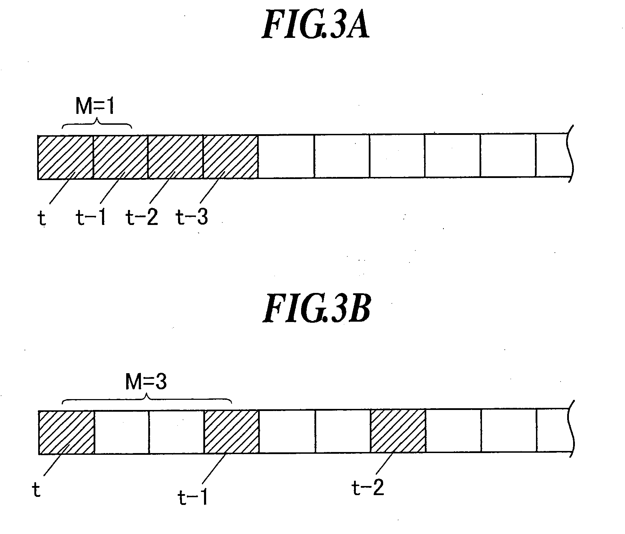

In this embodiment, as the input images t, t-1, ..., an input image t of the current time t and input images t, t-1, ..., t-k of each M frame before the input image t are input to the processing program, and k is set to 3 and M is set to 1. That is, as shown in FIG. 3A, the input image t of the current time t and input image of each one frame before that, i.e., input images t, t-1, t-2 and t-3 of four continuous frames which are picked up at time intervals of 1/30 seconds in reverse chronological order from the current time t are read from the memory 5, and they are input to the processing program.

Here, values of k and M can be set appropriately. For example, if k is set to 2 and M is set to 3, total three images of input images t, t-1, t-2 and t-3 of the current time t and three frames before the current time t are read and input to the processing program as shown in FIG. 3B. It is also possible to select a plurality of different kinds of input images by another selecting method and to input the same to the processing program.

Although the general image filters F as shown in Table 1 are used in the processing program of the embodiment to enhance the calculation speed, it is also possible to add an image filter having a special function in accordance with a purpose.

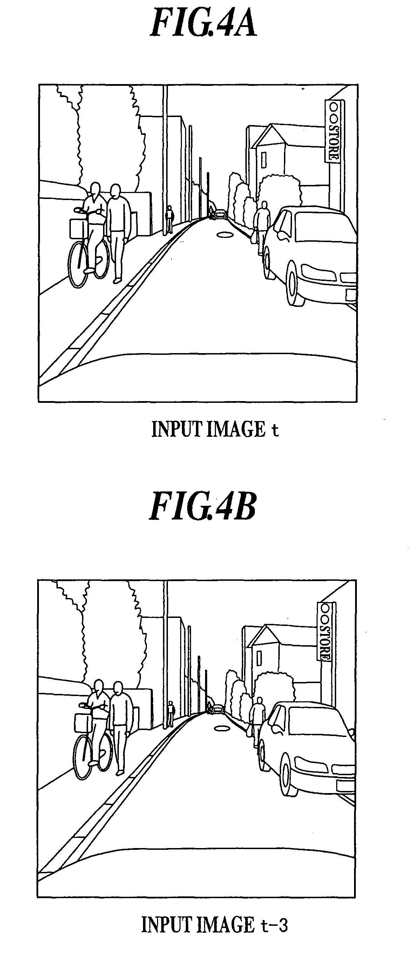

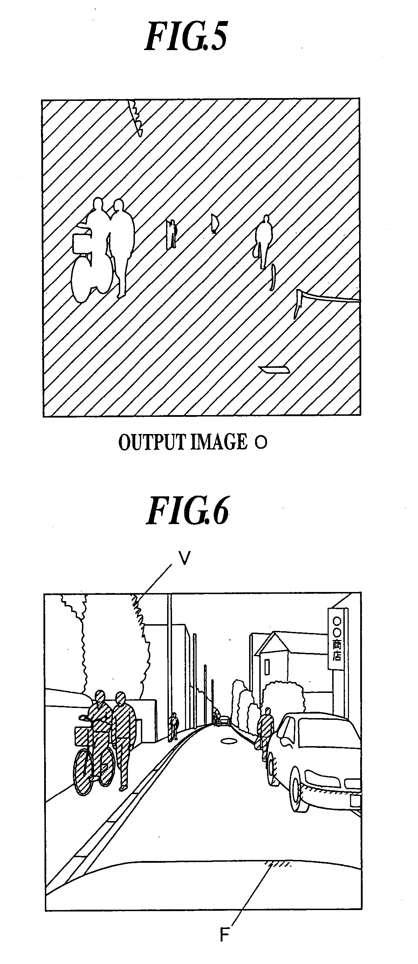

The image processor 1 of the embodiment extracts a pedestrian as a specific object from an image of a landscape in front of the vehicle as described above, and the processing program also extracts a pedestrian from the input image t. That is, if input images t, t-1, t-2 and t-3 (see FIGS. 4A and 4B, wherein FIG. 4A shows the ii t and FIG. 4B shows input image t-3) of the continuous four frames are input to the processing program, the processing program carries out the image processing by each image filter F, and forms the output image O which extracts a specific object including a pedestrian as shown in FIG. 5. In the output image O in FIG. 5, the brightness value of the picture element of the hatch portion is 0.

In the embodiment, the output image O formed in this manner is superposed on the input image t displayed on the monitor of the display section 4 and is displayed. That is, the input image t sent from the image processing section 3 is displayed on the monitor of the display section 4 as described above, and the output image O formed by the processing program is superposed on the input image t and displayed as shown in FIG. 6. At that time, the input image t is displayed as a monochrome image, and a picture element portion (hatch portion in the drawing) having a positive brightness value among the output images O is displayed in red.

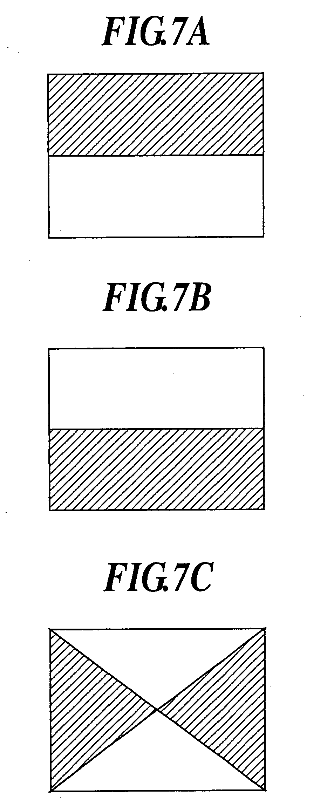

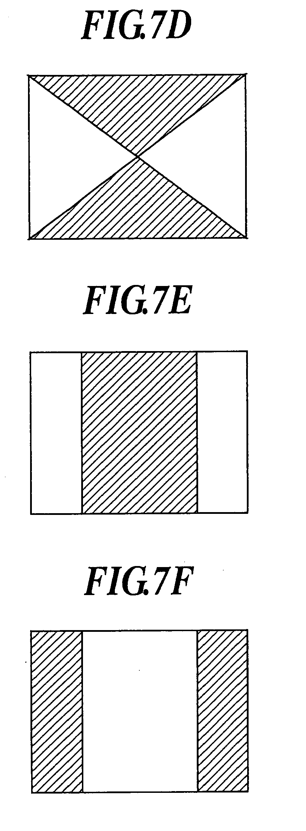

At that time, the output image O of the processing program can be subjected to image processing by a mask filter as shown in FIGS. 7A to 7F. For example, since a red-colored portion F of a front portion of the vehicle and a tree-colored portion V at an upper portion of the image in FIG. 6 are unnecessary colored portions, the image processing can be carried out using the mask filter so that these colors are not displayed.

The processing program may be constructed artificially and can be given to the image processing section 3. In the tree structure processing program as shown in FIG. 2, forty image filters F of one-input or two-input at the maximum as shown in Table 1 can be combined arbitrarily, and all of tree structure processing programs in which the input images t, t-1, t-2 and t-3 are arbitrarily combined can be searched.

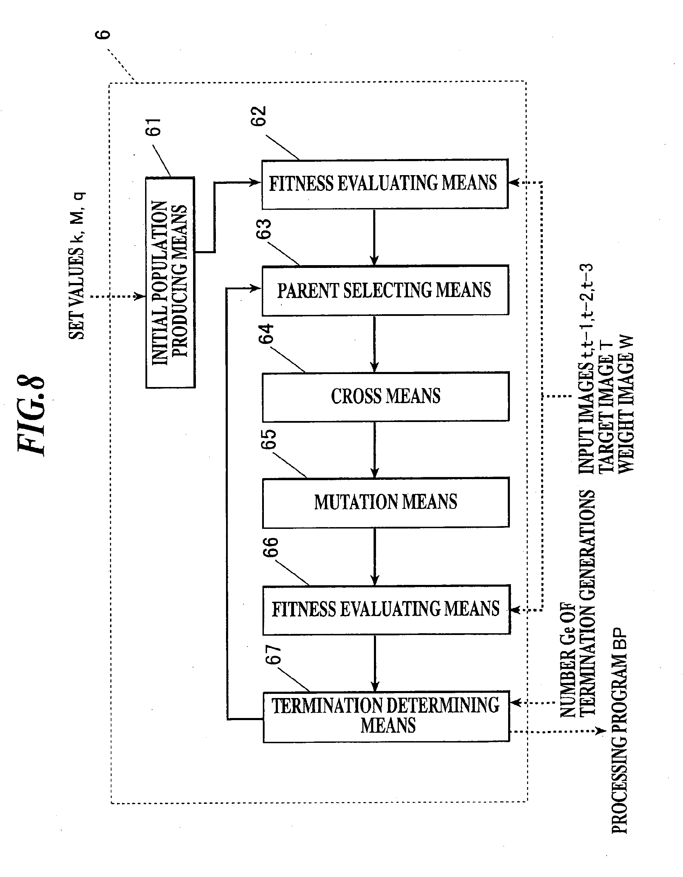

In this embodiment, the processing program forming section 6 connected to the image processing section 3 automatically form using the genetic programming technique. FIG. 8 is a block diagram showing a structure of the processing program forming section. The processing program forming section 6 includes initial population producing means 61, fitness evaluating means 62 and 66, parent selecting means 63, cross means 64, mutation means 65 and termination determining means 67.

The initial population producing means 61 produces a constant number q (100 populations in the case of the embodiment) of tree structure processing programs as shown in FIG. 2 at random in a range of the set k and M values in accordance with processing program forming instructions from the input section 7 (see FIG. 1) comprising a keyboard and a mouse.

As a rule for producing the processing programs at random, in this embodiment, the number of image filters F (i.e., non-terminal symbols) of nodes constituting the tree structure processing programs in the process of evolution until not only the initial population but also an optimized processing program BP are obtained is set such that the number at the maximum does not exceed 40. The image filters F are selected at random from the image filters shown in Table 1. A mask filter as shown in FIGS. 7A to 7F can be included in the image filters F to be selected in addition to the various image filters shown in Table 1.

As described above, in this embodiment, k is set to 3 and M is set to 1, an input image to be input to the processing program is arbitrarily selected from the input images t, t-1, t-2 and t-3 of continuous four frames which are picked up at time intervals of 1/30 seconds in reverse chronological order from the constant time t. It is unnecessary to use all of the four kinds of input images t, t-1, t-2 and t-3 as the input images of the processing program, and a processing program which uses two kinds, i.e., the input image t and the input image t-2, or only the input image t-3 can be included in the initial population.

The fitness evaluating means 62 is connected to the initial population producing means 61, and initial population of each processing program produced by the initial population producing means 61 is sent to the fitness evaluating means 62.

In the fitness evaluating means 62, simulations for inputting input images t to t-3 for the respective processing programs to obtain output image O are carried out, the output image O obtained by the simulation and the target image T are compared with each other; and fitness E of each processing program is calculated based on the following Equation (1):

$$\underline{\text{Equation 1}}$$

$$E = 1.0 - \frac{1}{N} \sum_{set} \frac{\sum\limits_{pixel} W \cdot |O - T|}{\sum\limits_{pixel} W \cdot 256} \qquad \dots(1)$$

N = number of learning sets
O = Output image
T = Target image
W = Weight image

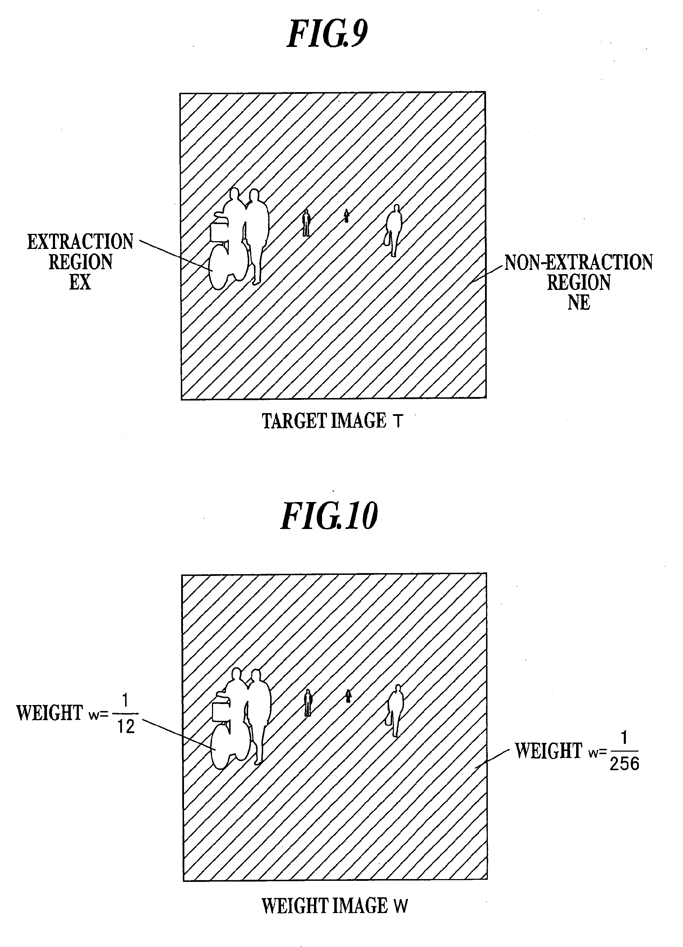

Here, the target image T is an image that should be output by the optimized processing program BP. In this embodiment, the purpose of the processing program is to extract a pedestrian from an image of a landscape in front of a vehicle. Therefore, an image (see FIG. 9) in which only a pedestrian from the input image t (see FIG. 4A for example) is shown as a hollow extraction region EX (brightness value 255) and other portions are shown as non-extraction region NE (brightness value 0) is sent to the fitness evaluating means 62 as the target image T.

The weight image W is an image in which a weight W for assigning weight to a distance |O-T| between the output image O and the target image T for each picture element is defined in each picture element, and the weight w for each picture element is appropriately determined depending upon a purpose of the processing program to be constructed. Usually, the weight W is set great in a picture element region where it is strongly required that the output image O and the target image T match each other, and the weight W is set small in a picture element region where it is not strongly required that the output image O and the target image T match each other.

Since the object of the embodiment is to extract a pedestrian and not to extract other things, it is strongly required that the output image O and the target image T match each other in both the extraction region EX and the non-extraction region NE of the target image T. However, if the weight w is set equally in all images, an area rate of a picture element region occupied by a pedestrian in the output image O (i.e., extraction region EX) becomes smaller (area ratio is 12: 256) than an area rate of the other picture element region (i.e., non-extraction region NE), and there is a possibility that the contribution of matching degree in the non-extraction region in the fitness evaluation becomes excessively large.

Therefore, in this embodiment, the weight image W becomes a similar image to the target image T (see FIG. 9) as shown in FIG. 10, the weight w is set to be 1/12 and 1/256 in the extraction region EX and non-extraction region NE so that a ratio of weight w in the extraction region and weight w in the non-extraction region becomes a ratio of reciprocal of respective area ratios. The weight image W is sent to the fitness evaluating means 62 together with the target image T and the input images t, t-1, t-2 and t-3 which are read from the memory 5.

In the fitness evaluating means 62, fitness E of each processing program is calculated using the weight image W and the plurality kinds of input images t, t-1, t-2 and t-3 and in this embodiment, the simulation of the processing program is carried out using two or more sets of sets S (learning set S, hereinafter) comprising a combination of the weight image W, the input images t, t-1, t-2 and t-3 and the target image T.

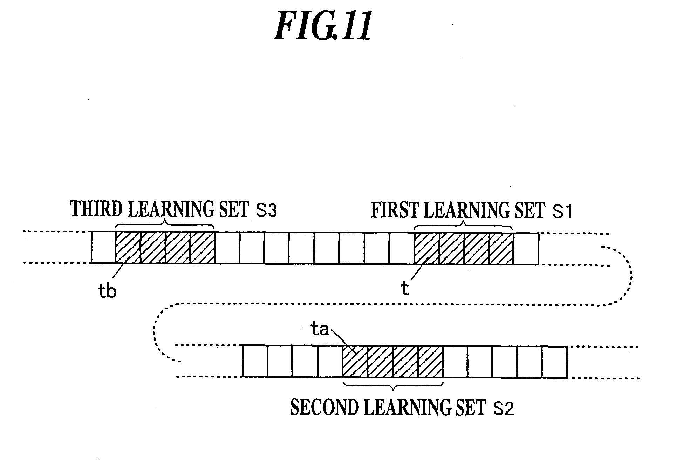

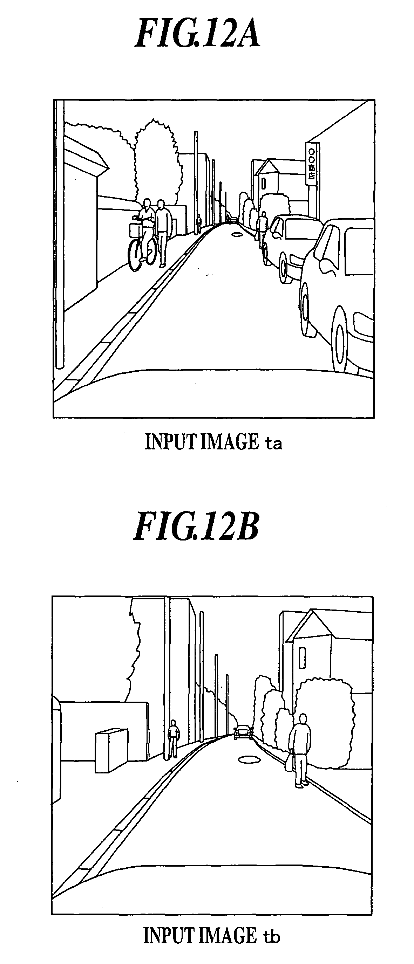

That is, as shown in FIG. 11 for example, three sets in total (N=3 in the equation (1) in this case), i.e., a first learning set S1 comprising the plurality kinds of input images t, t-1, t-2 and t-3 and the target image T and weight image W corresponding thereto at time t, a similar second learning set S2 such as input image ta (see FIG. 12A) at time ta before the time t, and a similar third learning set S3 such as an input image tb (see FIG. 12B) at time tb before time t are sent to the fitness evaluating means 62, simulations are carried out thee times for one set by one set per each processing program, $\Sigma W \cdot |O-T|/\Sigma W \cdot 256$ in the equation (1) is calculated for respective learning sets S, and the fitness E is obtained based on the equation (1).

The parent selecting means 63 is connected to the fitness evaluating means 62, and each processing program whose fitness E is calculated by the fitness evaluating means 62 is sent to the parent selecting means 63.

The parent selecting means 63 selects a processing program of 100 populations to be remained for next generation by a method of selection of roulette, selection of expected value, selection of ranking or selection of tournament based on the fitness E from each processing program, and increases the processing program. In this embodiment, the 100 populations are selected by selection of tournament, and the fitness E simultaneously carries out elite preservation of the maximum processing program.

The processing program of the 100 populations which is selected and increased by the parent selecting means 63 is sent to the cross means 64.

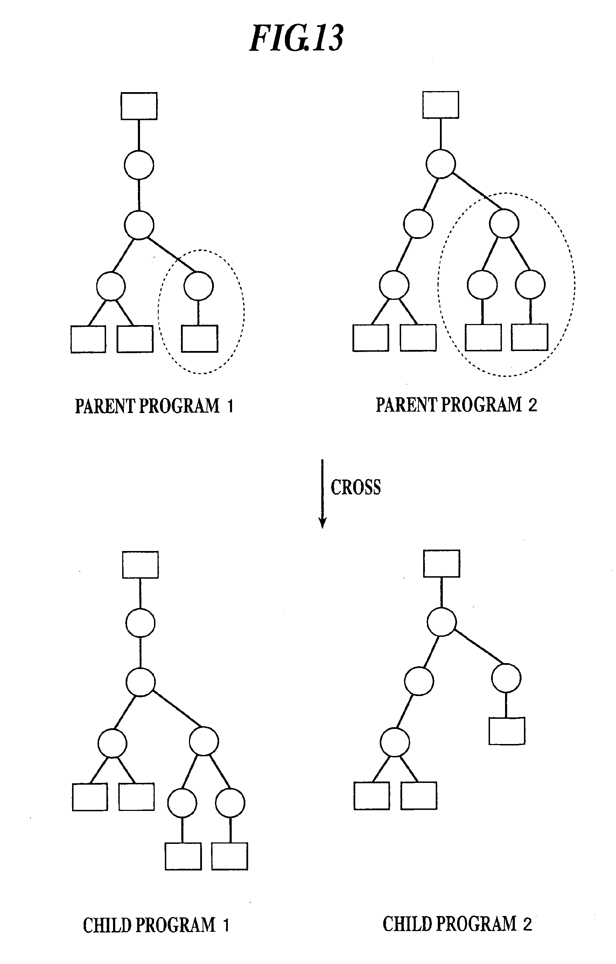

In the cross means 64, as shown in FIG. 13, the processing programs sent from the parent selecting means 63 are made in pair two populations each (called parent programs 1 and 2), cross portions (portions surrounded by dotted lines of the parent programs 1 and 2 in FIGS. 13) which are selected at random for each pair of populations are crossed at predetermined ratio, and child programs 1 and 2 are produced. At that time, when the two child programs including more than 40 non-terminal symbols are produced, their cross is canceled, the cross portion is selected at random by the original parent programs 1 and 2 and they cross.

In this embodiment, cross at one point as shown in FIGS. 13 is carried out in the cross means 64, but other cross such as cross at multiple points, uniform cross can also be employed.

A processing program that is a child program of 100 populations produced by the cross means 64 is sent to next mutation means 65.

In the mutation means 65, modification, insertion, deletion and the like of nodes are generated at a predetermined rate for each processing program. At that time, when the number of non-terminal symbols in the processing program exceeds 40 by the insertion of node, the insertion is not carried out, and modification of the terminal symbol (i.e., input image t and the like) and the non-terminal symbol (i.e., image filter F) is prohibited. Mutation such as translocation and superposition may be carried out and at that time, appropriate limitation is set.

The fitness evaluating means 66 is connected to the mutation means 65, and a processing program of 100 populations produced by the mutation means 65 is sent to the fitness evaluating means 66. The same processing as that of the fitness evaluating means 62 is carried out in the fitness evaluating means 66, first to third learning sets which are the same as those used in the fitness evaluating means 62 are used, a simulation is carried out for each processing program, and fitness E is calculated based on the equation (1).

The termination determining means 67 is connected to the fitness evaluating means 66. Each processing program whose fitness E is calculated by the fitness evaluating means 66, and a processing program which has the maximum fitness of older generation elite preserved by the parent selecting means 63 are sent to the termination determining means 67, and it is determined whether the formation of the processing program in the processing program forming section 6 is completed.

In this embodiment, the termination determining means 67 determines whether the number of generations of the process of evolution reaches a preset number Ge of termination generations, and if it is determined whether the number of generations reaches the number Ge of termination generation, the processing program BP having the maximum fitness E is output to the image processing section 3 as solution at that time and the formation of program is completed. If the termination determining means 67 determines that the number of generations does not reach the number Ge of termination generations, the termination determining means 67 sends each processing program to the parent selecting means 63, and the above-described processing procedure is repeated.

In addition to this, the termination determining means 67 determines whether there is a processing program whose fitness reaches a preset target fitness Eq in each processing program, and if there is a processing program whose fitness reaches the target fitness Eq, this processing program may be output to the image processing section 3 as solution. It is also possible to employ such a configuration that the termination determining means 67 stores the maximum value of the fitness of each processing program, and when the maximum value of the fitness is not varied even when a predetermined number of generation elapsed, i.e., when the maximum value of fitness stagnates, the procedure is completed in this generation, the processing program having the maximum fitness is output to the image processing section 3 as solution.

In the processing program forming section 6, a processing program BP which is optimized based on the above-described process of evolution is formed, and phenomenon so-called excessive learning is found in the obtained processing program BP in some cases. That is, if this case is applied to this embodiment, there is obtained in some cases such a processing program BP that a general pedestrian is not extracted, a pedestrian wearing white clothes is not extracted, and only a pedestrian wearing a thick color clothes is extracted.

To avoid such an excessive learning, in this embodiment, fitness E' in which the excessive learning limitation is taken into account is calculated based on the following equation (2) from the fitness E calculated in the equation (1) in the fitness evaluation in the fitness evaluating means 62 and 66. Therefore, in this embodiment, the fitness E' in which the excessive learning limitation is taken into account is compared and referred to in the parent selecting means 63 and the termination determining means 67.

## Equation 2

$$E' = E - a \cdot n \, (\text{node}) + b \cdot m \, (2 \, \text{input\_node}) \qquad \ldots (2).$$

E' = fitness in which excessive learning limitation is taken into account

E = fitness calculated based on equation (1)

a, b = coefficients

n (node) = number of nodes

m (2 input_node) = number of nodes of two-input filter

Both the coefficients a and b are positive values. According to the equation (2), the fitness E' in which the excessive learning limitation is taken into account is calculated such that the fitness E' is smaller as the number n of nodes (Node) in the processing program is greater and the fitness E' is greater as the number m of nodes (2 input-node) is greater.

The reason why the fitness E' in which the excessive learning limitation is taken into account is constituted as described in the equation (2) is that an object to be extracted is more limited as the number of nodes of the tree structure processing program is greater, the state is prone to become the excessive learning state, and a general object (overall pedestrians in this embodiment) can be extracted more as the number of nodes is smaller, and the general versatility is enhanced.

If the fitness E' becomes smaller as the number of nodes is greater, the rate of the two-input image filter in the tree structure of the processing program becomes smaller, and even if input of the four kinds of input images (i.e., input images t, t-1, t-2 and t-3) is permitted as the input image like the embodiment, the tendency that a processing program which only inputs of low kinds of input images is obtained in the actual case becomes stronger and thus, the fitness E' becomes greater as the number of nodes of the two-input image filter is greater.

The coefficients a nd b respectively show a rate of the number of nodes to the fitness E' and a rate of the number of nodes of the two-input image filter to the fitness E'. The coefficients a and b may be varied in accordance with the number of generations of the process of evolution of the genetic programming in the processing program forming section 6.

When the number of generations is small, if both the coefficients a and b take great values and take small values with generation, processing programs in which the number of nodes is high are prone to be culled (effect of a), and the possibility that a predetermined including much two-input image filters remains becomes high (effect of b). If both the coefficients a and b become great with generation on the contrary, the processing specialized for the learning set S obtained in the initial stage of evolution can be simplified in the latter half of evolution.

When the evolution is going and the maximum value of the fitness is stagnated, if the values of the coefficients a and b are changed artificially, the possibility that more optimized processing program BP can be obtained.

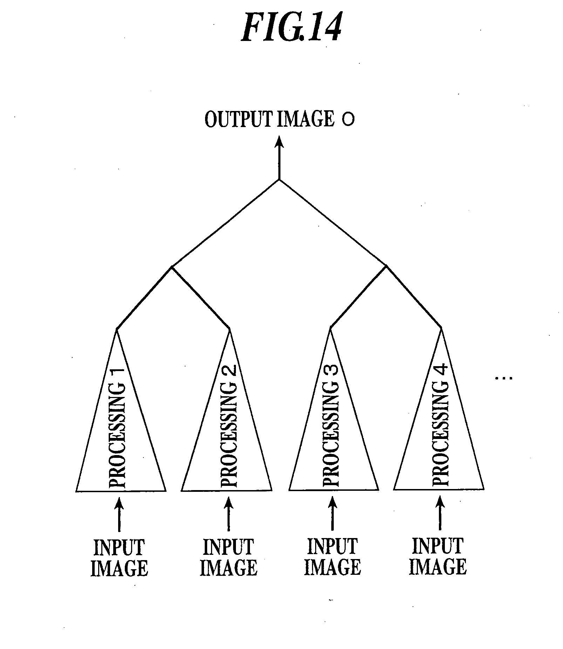

The processing program BP formed by the processing program forming section 6 in the above described manner is sent to the image processing section 3 as described above. In this embodiment, as shown in FIG. 14, the plurality of formed processing programs BP1 to BPn are combined and one larger scale processing program is formed.

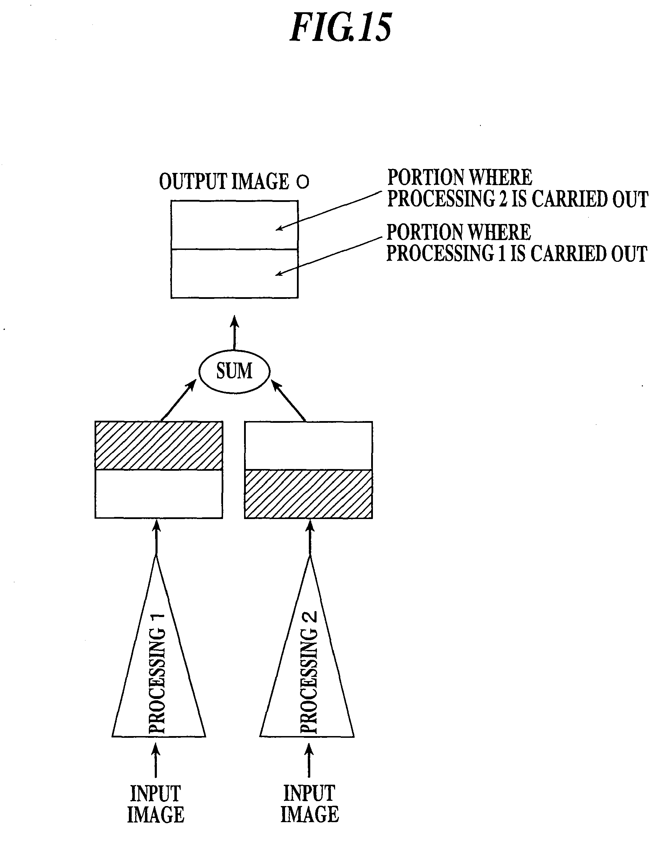

As a combining method, a logic sum is obtained for each picture element corresponding to n-number of output images O obtained by the processing programs BP1 to BPn, and a binarized image can be made as an output image O of the large scale processing program. Alternatively, the mask filter shown in FIGS. 7A and 7B is used to form the large scale processing program as shown in FIG. 15, results of image processing by the processing program BP1 and the processing program BP2 are displayed on lower and upper halves of the output image, and it can be made as one output image O.

In this embodiment, six processing programs BP obtained by genetic programming at the processing program forming section 6 are combined to constitute the large scale processing program. In this large scale processing program, noise is removed from the output image O, and red color is more strongly displayed in a picture element where an image is extract by more processing programs BP among picture elements of output image O. Therefore, an output result of an i-th processing program BPi in the picture element where there is an output image O is defined as dynamic image, and an output brightness value D in each picture element of the output image O is determined based on a non-linear superposition shown in the following equation (3).

$$\underline{Equation\ 3}$$

$$D' = 256 \times \frac{1}{n}\sum_{i=1}^{n}\left(\frac{di}{256}\right)^{P} - 1 \qquad\qquad ........(3).$$

D = D'(D'≥K)

D = 0(D'<K)

In the case of the embodiment, n is set to 6 and p is set to 2. A threshold value K is a constant and is set to 127 in the embodiment. Values of p and K may arbitrarily be set. If the value of p is set greater, a picture element in which an image is extracted can be more emphasized and displayed.

Next, operation of the image processor 1 of the embodiment will be explained.

The image input section 2 (see FIG. 1) of the image processor 1 mounted on an inner side of a front glass of a vehicle takes a picture of a landscape in front of the vehicle, and the image (see FIG. 4A) is sent to the image processing section 3 as the input image t. The image input section 2 repeats this action every 1/30 seconds.

If the image processing section 3 receives the input image t from the image input section 2, the image processing section 3 sends the same to the display section 4 and displays the same on the monitor, and temporarily stores the input image t in the memory 5. At the same time, input images t, t-1, t-2 and t-3 stored in the memory 5 are read, the input images t, t-1, t-2 and t-3 are input to the processing program in which image filters F are combined in tree structure to form the output image O, and a red colored output image O is superposed on the input image t displayed as a monochrome image on the monitor of the display section 4 and is displayed.

As described above, the processing program may be constructed artificially, but the processing program can be previously formed by genetic programming in the processing program forming section 6.

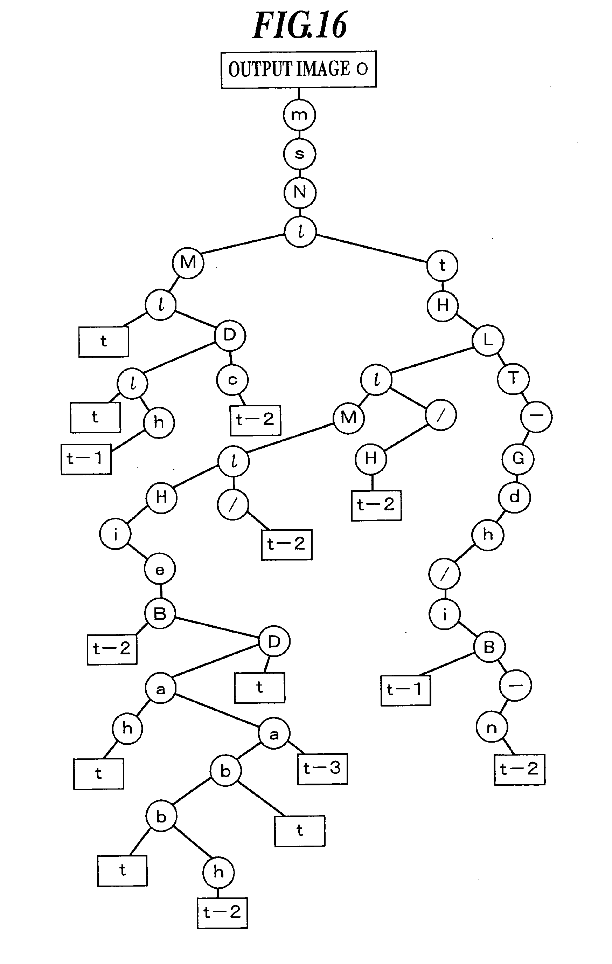

The procedure for forming the processing program in the processing program forming section 6 is as described above. Here, one example of the processing program BP as solution formed by the genetic programming in the processing program forming section 6 is shown in FIG. 16. In this case, the number of non-terminal symbol, i.e., the number of image filters F is 40, the number of input images t, t-1, t-2 and t-3 of the terminal symbol is 15, and the number of output images O is 1.

The processing program BP shown in FIG. 16 and a processing program obtained in the same manner as that of the processing program BP can be combined based on the equation (3) to form a large scale processing program. If the input images t, t-1, t-2 and t-3 (see FIGS. 4A and 4B) are input to the large scale processing program, an output image O which extracts a specific object including a pedestrian shown in FIG. 5 can be obtained, and if a red colored output image O is superposed on the input image t displayed as a monochrome image on the monitor of the display section 4 and is displayed, an image as shown in FIG. 6 can be obtained.

If the processing program BP formed in the processing program forming section 6 is seen, it is frequently observed that processing by a difference filter is carried out at early stage of processing of image filter F with respect to the input images t, t-1, t-2 and t-3. It is considered that this is because the purpose of the processing program of the embodiment is to take a picture of a forward landscape from a moving vehicle to extract a pedestrian who is moving or stopping from the image, and a pedestrian is extracted from the plurality of input images t, t-1, t-2 and t-3 of a time series in which a position of the pedestrian is gradually slightly varied.

Therefore, instead of inputting all of images as shown in FIGS. 4A and 4B, difference image between frames of a plurality of images picked up at time intervals (i.e., time differential data) can be input. It is also possible to input edge extraction image (i.e., space differential data in each image) in each of the input images t, t-1, t-2 and t-3.

As described above, according to the image processor 1 of the embodiment, the plurality kinds of input images t, t-1, ..., t-k of front landscape of the vehicle picked up at time intervals can be input to the processing program in which the image filters F are combined in tree structure. With this, a plurality of frames of dynamic image can be input to the processing program, and a dynamic image can be subjected to the image processing.

Frames of dynamic images (e.g., forward landscape of a vehicle) are compared by various image filters F such as difference filter constituting the processing program of tree structure, and image processing such as difference is received and with this, it is possible to effectively form an output image O in which a specific object (pedestrian in the case of this embodiment) causing variation and displacement in terms of time from the dynamic image.

By automatically forming the processing program BP by genetic programming in the processing program forming section 6, the processing program BP can easily be obtained. By changing the target image T and the weight image W, a specific object to be extracted can easily be changed. That is, unlike the conventional technique, it is possible to easily construct the processing program BP in the same procedure while using the above-described genetic programming method as it is only by changing the target image T and weight image W without manually constructing a processing program for extracting the specific object.

At that time, in forming the processing program BP, when learning is carried out while using only one learning set S comprising a combination of the input images t, t-1, ..., t-k shown in FIGS. 4A and 4B, the target image T shown in FIG. 9 and the weight image W shown in FIG. 10, only a person on the left side in an image of a superposed image of FIG. 6 is extracted in some cases. If such a phenomenon occurs, only a left side person in the image is extracted even if an image as shown in FIG. 12B is input, and a pedestrian on the right side in the image can not be extracted.

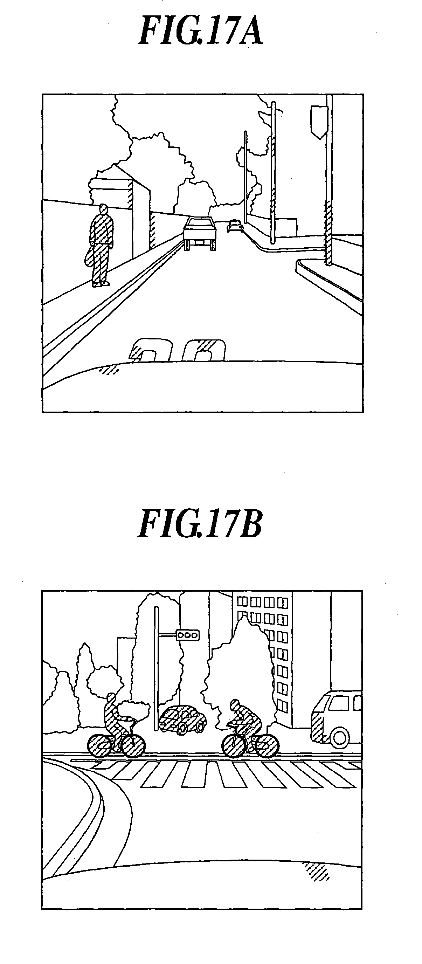

However, if a plurality of learning sets S comprising the combination of the input images t, t-1, ..., t-k, the target image T and the weight image W are used for forming the processing program BP as in this embodiment, it is possible to avoid such a phenomenon. Further, it becomes possible to more reliably extract a person from a landscape that is not used in the learning set S in the genetic programming as shown in FIGS. 17A and 17B, and it is possible to obtain a general processing program capable of extracting only a person from a dynamic image reliably.

If the plurality of processing programs obtained in this manner are combined to form a large scale processing program, such effects can further effectively be exhibited.

When a processing program is obtained by the genetic programming, as the number of image filters F (non-terminal symbols) constituting the processing program BP is increased, a searching space of a solution program is usually increased exponentially, and enormous search is required. However, if the plurality of processing programs BP formed by using different learning sets S are combined as in this embodiment, it is possible to obtain a general processing program BP capable of extracting a specific object more easily and reliably.

It is an object of the embodiment to take a picture of a forward landscape from a moving vehicle and to extract a pedestrian from the image. In addition to this, it is possible to extract a vehicle from the forward landscape, to extract a general moving object such as a vehicle and a pedestrian, or to extract a boundary between a roadway and a sidewalk. Further, they can be combined so that a boundary between a roadway and a sidewalk is extracted and a vehicle or pedestrian moving on a roadway therebetween is extracted.

Although the output image O is superposed on the input image t and they are displayed in this embodiment, if the image processor 1 of the embodiment and other device are combined, it is also possible to send a specific object extracted by the image processor 1 of the embodiment to the other device and monitor the same, or to measure a distance to the object by the other device.

By combining the image processor 1 of the embodiment and a distance measuring device, and by specifying a pedestrian by the image processor 1 of the embodiment and measuring a distance to the pedestrian by the distance measuring device, it is possible to give an alarm when approaching, and to control the running to avoid collision. The distance measuring device need not measure a distance to an object in the entire region in front of a vehicle, and this reduces a burden.

The image processor 1 of the embodiment can be mounted not only on a vehicle but also on an artificial intelligent robot. For example, the image processor 1 can be used for founding and measuring another moving object while observing an environment using a camera provided on the image processor 1, and determining action of the robot with respect thereto.

Second Embodiment

A second embodiment of the image processor of the invention will be explained with reference to the drawings. In the second and third embodiments, image processors which are mounted on a vehicle for extracting an oncoming vehicle from a landscape image in front of the vehicle will be described, but the present invention is not limited to such image processors.

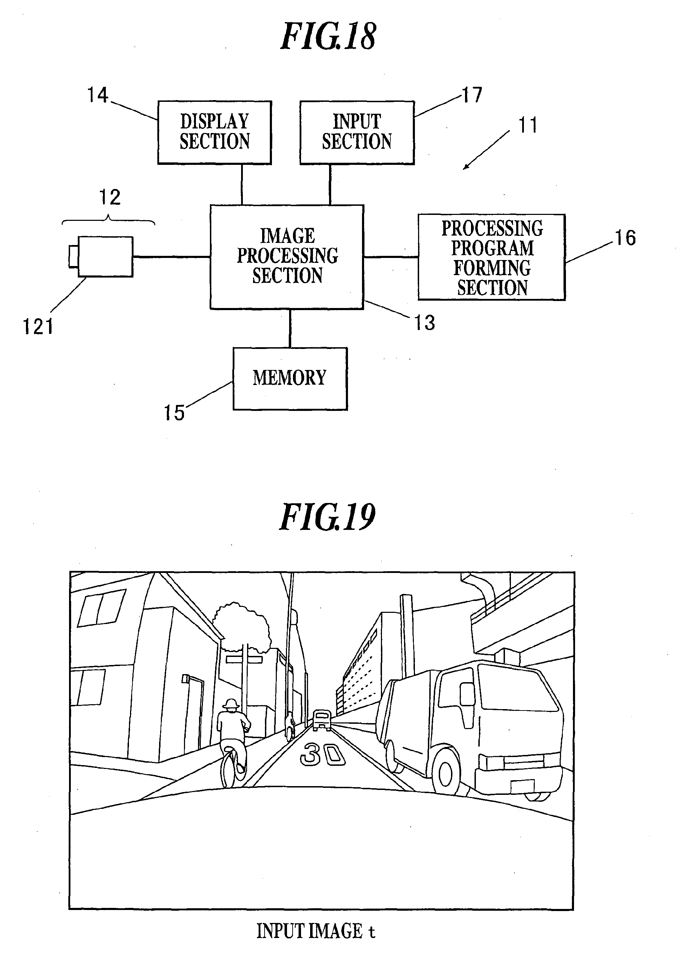

FIG. 18 is a block diagram showing a structure of the image processor of the embodiment. The image processor 11 includes an image input section 12, an image processing section 13, a display section 14, a memory 15, a processing program forming section 16 and an input section 17. As the image processor 11, it is possible to use a computer comprising a CPU, a RAM, a ROM, and an I/O interface in this embodiment.

Since the structure of the image input section 12 is the same as the image input section 2 of the first embodiment, explanation thereof will be omitted. An image signal which is output from an imaging apparatus 121 is converted into digital gradation value of 256 levels by A/D conversion in an A/D converter, and the signal is subjected to geometric correcting processing such as brightness correction, noise removal, affine conversion or the like. The same is applied also to the first embodiment.

The image processing section 13 subjects an input image t as shown in FIG. 19 which is picked up by the imaging apparatus 121 and sent therefrom to image processing, and forms a specific object, e.g., an output image O in which an oncoming vehicle such as a truck picked up on the right side in FIG. 19 in this embodiment.

That is, the image processing section 13 reads, from the memory 15 connected to the image processing section 13, a processing program BP comprising a tree structure shaped combination of various image filters F formed by the processing program forming section 16, and develops the same in the RAM, produces an input image t of the current time as shown in FIG. 19 and an optical flow image OF from the input image picked up before the input image t, inputs these images to the processing program BP, carries out the image processing, and forms an output image O in which an oncoming vehicle is extracted.

The image processing section 13 carries out the image processing, sends, to the memory 15, the plurality of input images sent from the image input section 12 and stores the input images therein in succession. In this embodiment, the display section 14 having a monitor and the input section 17 having a keyboard and a mouse are connected to the image processing section 13.

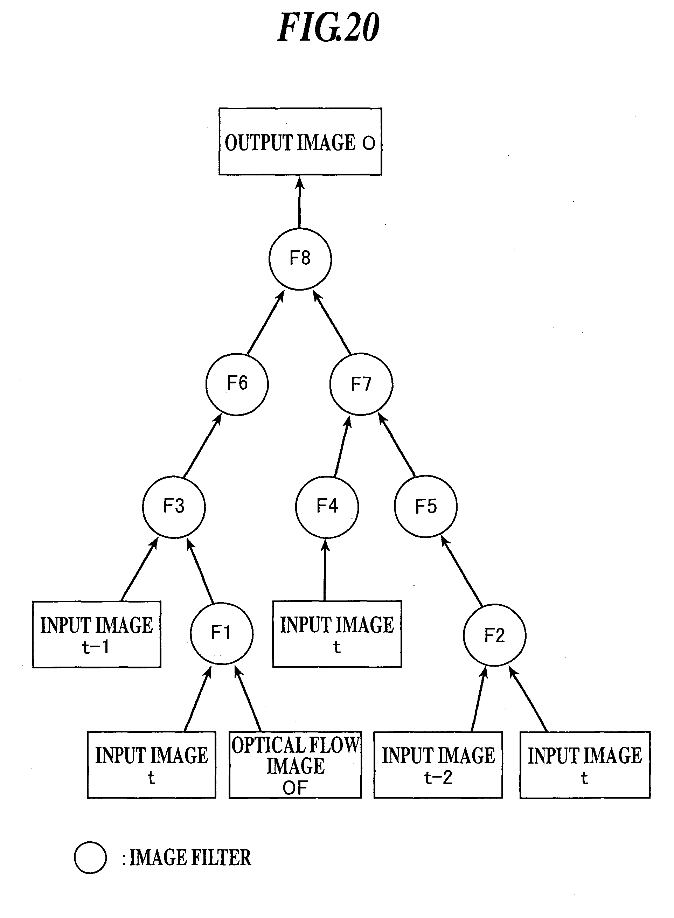

A structure of the processing program will be explained. The processing program is a program comprising various image filters F combined in tree structure as shown in FIG. 20 as an example. The processing program subjects input images t, t-1, ..., t-k (k is an integer not smaller than 1) of a plurality of frames constituting a dynamic image and an optical flow image OF produced by these images to image processing in succession by the image filters F, thereby forming an output image O.

In this embodiment, the image filters F are selected from image filters F which input one or two image data sets shown in the following Tables 2 and 3. The image filter F which inputs one image shown in Table 2 is one input image filter, and the image filter F which inputs two images are two-input image filter.

Table 2

| NAME OF FILTER | SYMBOL | CONTENTS OF PROCESSING |
|---|---|---|
| MINIMUM VALUE FILTER | - | OBTAIN AVERAGE VALUE OF 3x3 PICTURE ELEMENTS |
| AVERAGE VALUE FILTER | m | OBTAIN MINIMUM VALUE OF 3x3 PICTURE ELEMENTS |
| MAXIMUM VALUE FILTER | M | OBTAIN MAXIMUM VALUE OF 3x3 PICTURE ELEMENTS |
| SOBEL FILTER | d | OBTAIN SOBEL OF 3x3 PICTURE ELEMENTS |
| LAPLACIAN FILTER (TYPE 1) | / | OBTAIN ABSOLUTE VALUE OF LAPLACIAN OF 3x3 PICTURE ELEMENTS |
| LAPLACIAN FILTER (TYPE 2) | g | OBTAIN LAPLACIAN OF 3x3 PICTURE ELEMENTS, AND A VALUE NOT HIGHER THAN 0 IS SET TO 0 |
| 3x3 MEDIAN FILTER | v | OBTAIN A MEDIAN VALUE OF 3x3 PICTURE ELEMENTS |
| WIDE REGION FILTER | S | REMAIN ONLY WIDE REGION GROUP AFTER GROUPING |
| NARROW REGION FILTER | s | REMAIN ONLY NARROW REGION GROUP AFTER GROUPING |
| HIGH CHARGING RATE FILTER | P | REMAIN GROUP HAVING HIGH CHARGING RATE AFTER GROUPING |
| LOW CHARGING RATE FILTER | P | REMAIN GROUP HAVING LOW CHARGING RATE AFTER GROUPING |
| SQUARE DEGREE FILTER | R | REMAIN GROUP HAVING HIGH SQUARE DEGREE AFTER GROUPING |
| RECTANGULAR DEGREE FILTER | r | REMAIN GROUP HAVING LOW SQUARE DEGREE AFTER GROUPING |
| CIRCULAR DEGREE FILTER | C | REMAIN GROUP HAVING HIGH CIRCULAR DEGREE AFTER GROUPING |
| NON-CIRCULAR DEGREE FILTER | c | REMAIN GROUP HAVING LOW CIRCULAR DEGREE AFTER GROUPING |
| SYMMETRY FILTER | Q | REMAIN GROUP HAVING HIGH SYMMETRY DEGREE AFTER GROUPING |
| NON-SYMMETRY FILTER | q | REMAIN GROUP HAVING LOW SYMMETRY DEGREE AFTER GROUPING |
| REVERSE FILTER | i | REVERSE BRIGHTNESS VALUE |
| LINEAR CONVERSION FILTER | H | CONVERT BRIGHTNESS LINEAR |
| GAMMA FILTER | G | CORRECT GAMMA OF BRIGHTNESS VALUE |
| BINARY FILTER | N | BINARIZE BY MEANS OF THRESHOLD VALUE |
| EXPANSION FILTER | x | EXPAND AFTER BINARIZATION |

(continued)

| NAME OF FILTER | SYMBOL | CONTENTS OF PROCESSING |
|---|---|---|
| CONTRACTION FILTER | y | CONTRACT AFTER BINARIZATION |
| EXPANSION FILTER (TYPE 2) | X | THE SAME AS THE ABOVE X. THRESHOLD VALUE AT THE TIME OF BINARIZATION IS DIFFERENT. |
| CONTRACTION FILTER (TYPE 2) | Y | THE SAME AS THE ABOVE Y. THRESHOLD VALUE AT THE TIME OF BINARIZATION IS DIFFERENT. |
| WHITE PICTURE ELEMENT EXTRACTION FILTER | T | BRIGHTNESS LOWER THAN THRESHOLD VALUE IS 0, HIGH BRIGHTNESS IS CONVERTED AS IT IS |
| BLACK PICTURE ELEMENT EXTRACTION FILTER | t | BRIGHTNESS HIGHER THAN THRESHOLD VALUE IS 0, LOW BRIGHTNESS IS CONVERTED AS IT IS |
| WHITE EDGE EXTRACTION FILTER | E | EXTRACT ONLY POSITIVE EDGE BY LAPLACIAN FILTER |
| BLACK EDGE EXTRACTION FILTER | e | EXTRACT ONLY NEGATIVE EDGE BY LAPLACIAN FILTER |
| SOLID FILTER | h | BRIGHTNESS VALUE OF ENTIRE IMAGE IS SET TO CERTAIN VALUE |

[Table 3]

| NAME OF FILTER | SYMBOL | CONTENTS OF PROCESSING |
|---|---|---|
| LOGICAL SUM FILTER | L | OBTAIN LOGICAL SUM OF TWO IMAGES |
| LOGICAL PRODUCT FILTER | I | OBTAIN LOGICAL PRODUCT OF TWO IMAGES |
| ALGEBRAIC SUM FILTER | A | OBTAIN ALGEBRAIC SUM OF TWO IMAGES |
| ALGEBRAIC PRODUCT FILTER | a | OBTAIN ALGEBRAIC PRODUCT OF TWO IMAGES |
| LIMIT SUM FILTER | B | OBTAIN LIMIT SUM OF TWO IMAGES |
| LIMIT PRODUCT FILTER | b | OBTAIN LIMIT PRODUCT OF TWO IMAGES |
| DRASTIC SUM FILTER | U | OBTAIN DRASTIC SUM OF TWO IMAGES |
| DRASTIC PRODUCT FILTER | u | OBTAIN DRASTIC PRODUCT OF TWO IMAGES |
| DIFFERENCE FILTER | D | OBTAIN ABSOLUTE VALUE OF DIFFERENCE OF TWO IMAGES |

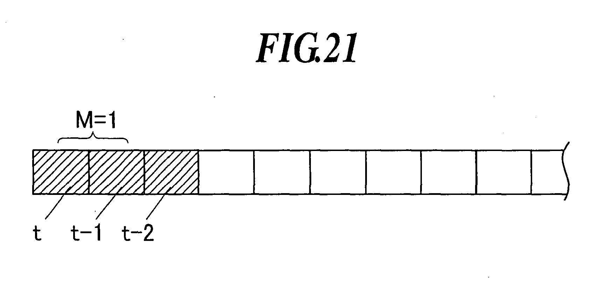

In the processing program of this embodiment also, like the selecting method of input images shown in FIGS. 3A and 3B in the first embodiment, an input image t of the current time t and input images t, t-1, ..., t-k of each M frame before the input image t are input as input images t, t-1, ..., t-k, and values of k and M are previously designated arbitrary. In this embodiment, k is set to 2 and M is set to 1 as shown in FIG. 21.

A plurality of different input images can be selected by another selecting method and these input images can be input to the processing program. A general image filter F as shown in Table 2 or 3 is used in the processing program of the embodiment for enhancing the calculation speed, but it is also possible to add an image filter having a special function depending upon purpose.

The image processing section 13 produces an optical flow image OF from the plurality of images in addition to the plurality of input images t, t-1 and t-2, and inputs the optical flow image OF to the processing program. In this embodiment, the image processing section 13 produces the optical flow image OF by block matching processing from the input image t and the input image t-1.

In the block matching processing, an input image t of the current time t which is a reference is divided into 4x4 picture element blocks, and the matching processing with the input image t-1 is carried out for each picture element block. As a matching processing method, various methods such as an SAD method, an SSD method and a normal correlation method are known, and it is possible to employ any of them.

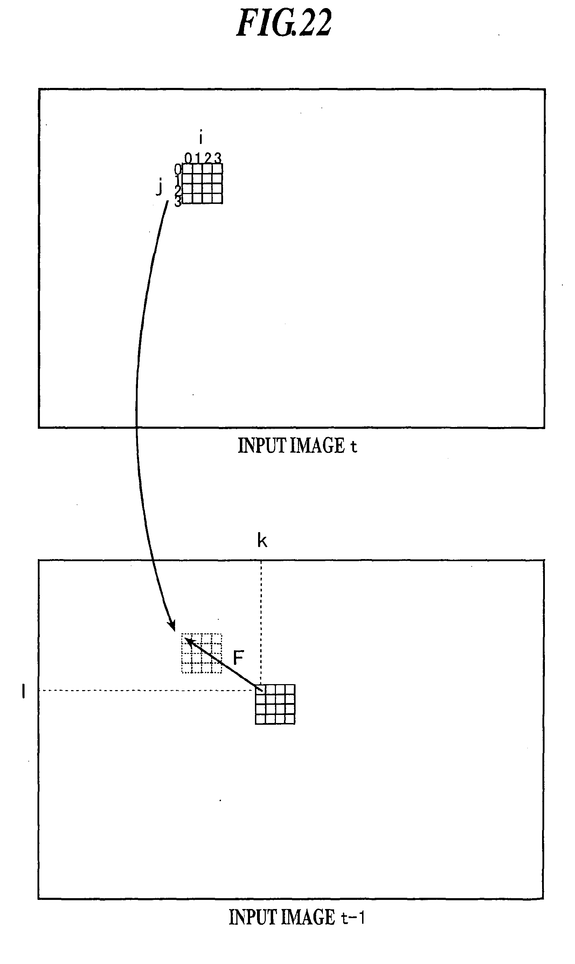

The SAD method which is employed in this embodiment will be explained briefly. As shown in FIG. 22, a left upper end picture element in a picture element block on the input image t is defined as an origin, an i-axis is set in a horizontal direction and a j-axis is set in a vertical direction. With this, coordinates of picture elements $P_{i,j}$ in the picture element block are indicated as (0, 0), (1, 0), ..., (3, 3). Brightness values of the picture elements $P_{i,j}$ on the input image t are indicated as $A^t_{i,j}$.

Further, blocks of 4x4 picture elements having origin at coordinates (k, 1) are set on the input image t-1 which is an object of the matching processing, and i and j are taken in the same manner as that described above. With this, coordinates of the picture elements on the block are indicated as (k+1, 1+j).

According to such definition, a total sum of an absolute value of a difference between the brightness value $A^t_{i,j}$ of of the picture element in the picture element block on the input image t, and a brightness value $A^{t-1}_{k+i,\ l+j}$ of the corresponding picture element in the block on the input image t-1, i.e., a city block distance $C_{k,l}$ is indicated as the following Equation (4).

### Equation 4

$$C_{kj} = \sum_{i,j} | A^1_{i,j} - A^{l-1}_{k+i,l+j} | \qquad \dots \dots (4).$$

According to the SAD method, an input image t-1 is raster scanned while deviating by one picture element by one picture element, and a block where the city block distance $C_{k,l}$ becomes minimum is defined as a block corresponding to a picture element block on the input image t. A flow vector F from a block on the input image t-1 to a picture element block on the input image t is defined as an optical flow in a picture element block on the input image t. The above-described operation is carried out for all of the picture elements in the input image t and with this, an optical flow image OF in which optical flow is calculated for each picture element block is produced.

In this embodiment, to shorten the calculation time of the city block distance $C_{k,l}$, the raster scanning is carried out only in a region of constant range including a picture element block on an input image projected on the input image t-1 instead of carrying out the raster scanning over the entire region of the input image t-1.

When a wall of a building and a road surface are taken and a difference in brightness value between 16 picture elements is small and characteristics are poor in the picture element on the input image t, since there are many blocks having brightness characteristics similar to that on the input image t-1, there is a possibility that the matching is in error even if a corresponding block is found in accordance with the equation (4).

Hence, in this embodiment, a flow vector F calculated by the matching processing is reliably only when the following two conditions are satisfied and this flow vector F is defined as an optical flow corresponding to a picture element block on the input image t. If one of the two conditions is not satisfied, it is determined that the reliability of flow is low and the optical flow of the picture element block is set to 0.

Condition 1: The minimum value $C_{min}$ of the city block value $C_{k,l}$ of the picture element block is equal to or lower than a preset threshold value $C_a$.
Condition 2: A difference between the maximum brightness value and the minimum brightness value of 16 picture elements constituting the picture element block is equal to or higher than a threshold value A'.

Therefore, in this embodiment, the image processing section 13 divides the input image t into picture element blocks and then, determines whether the picture element block satisfies the condition 2, and if the condition 2 is not satisfied, the image processing section 13 does not carry out the matching processing for the picture element block, and an optical flow of size 0 is allocated to the picture element block. When a picture element block satisfies the condition 2 but does not satisfy the condition 1, i.e., when the city block distance $C_{k,l}$ is greater than the threshold value $C_a$, the possibility that the matching is in error is high, the reliability is low and thus, an optical flow of size 0 is allocated to the picture element block.

In this embodiment, the optical flow image OF is produced as an image in which a size of the optical flow calculated for each picture element block, i.e., the length of the flow vector F is converted into a gradation value of each picture element block. A gradation value of a picture element block to which an optical flow of size 0 is allocated is 0.

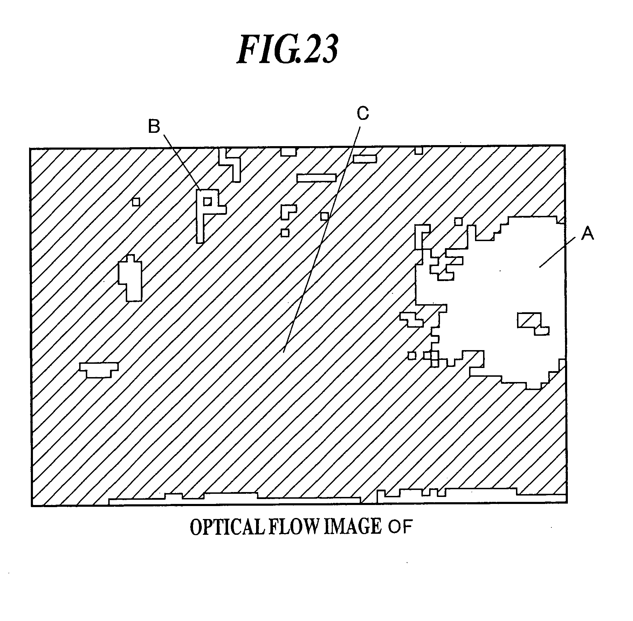

FIG. 23 shows an optical flow image OF produced based on the input image t shown in FIG. 19 and an input image t-1 (not shown). A hatch portion C in FIG. 23 is a picture element block portion where the gradation value is 0, and hollow portions A and B are picture element block portions having gradation values which are not 0. The hollow portions A and B have gradation values corresponding to the optical flow of each picture element block, and in the actual optical flow image OF, light and dark are color-coded.

As can be found from comparison between FIGS. 23 and 19, a portion shown with A in the drawing corresponds to a head of a truck which is an oncoming vehicle, and a portion shown with B in the drawing corresponds to leaf of a tree. A portion shown with C in the drawings is mainly a road surface, and a gradation value of the picture element block is 0.

The image processing section 13 inputs the optical flow image OF and the input images t, t-1 and t-2 produced in this manner to the processing program to form an output image O. When they are input to the processing program, to combine resolutions of the input images t, t-1 and t-2 and the optical flow image OF, one picture element block of the optical flow image OF may be processed as 16 picture elements having the same gradation values, but in this embodiment, to enhance the calculation speed in the processing program, the processing is carried out while using an image which is compressed such that the input images t, t-1 and t-2 are adjusted to resolution of the optical flow image OF.

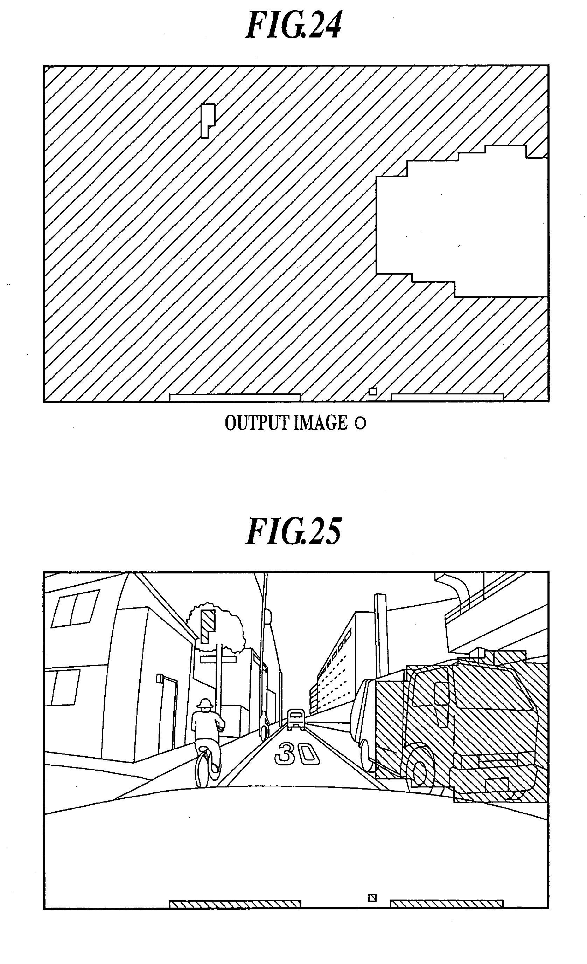

As a result of image processing by the processing program in the image processing section 13, the output image O as shown in FIG. 24 is formed. In the output image O shown in FIG. 24, a hollow picture element portion is a portion detected as an oncoming vehicle, and is displayed as a picture element having a gradation value which is not 0. A hatch portion is displayed as a portion in which no oncoming vehicle is detected and is displayed with a brightness value of 0.

In this embodiment, as shown in FIG. 25, the output image O is displayed such that it is superposed on the input image t displayed on the monitor of the display section 14. At that time, a hollow detection portion in FIG. 24 is displayed in red color (hatch portion in the drawing).

When the input image t and the output image O are superposed on each other and displayed, the output image O of the processing program can be subjected to the image processing by the mask filter as shown in FIGS. 7A to 7F. For example, since a colored portion of a front portion of the vehicle and a tree-colored portion at an upper portion of the image in FIG. 25 are unnecessary colored portions, the image processing can be carried out using the mask filter so that these colors are not displayed.

The information of the obtained output image O is displayed on the monitor of the display section 14, or instead of displaying the output image O, it can be sent to a control device which controls a subject vehicle to automatically control the vehicle to avoid danger.

Next, the processing program forming section 16 of the image processor 11 of the embodiment will be explained. The processing program can be constructed artificially and can be used for the image processing in the image processing section 13. In the tree structure processing program as shown in FIG. 20, forty image filters F of one-input or two-input at the maximum as shown in Table 2 or 3 can be combined arbitrarily, and all of tree structure processing programs in which the input images t, t-1 and t-2 and the optical flow image OF are input at arbitrarily positions can be searched, i.e., all of combinations are artificially produced so that a processing program by which the best result can be obtained can be constructed.

In the embodiment, in the processing program forming section 16 connected to the image processing section 13, the processing program BP is automatically formed by the genetic programming technique. In this embodiment, the processing program BP is previously formed by the processing program forming section 16 and stored in the memory 15 before image processing which is carried out by the image processing section 13 at the same time as the shooting by the imaging apparatus 21.

The processing program forming section 16 of the embodiment has the same structure as that of processing program forming section 6 of the first embodiment and thus, explanation thereof will be omitted. In this embodiment, however, in the process of evolution until not only the initial population but also the optimized processing program is obtained, the image filters F of nodes constituting the tree structure processing program is selected at random from the image filters shown in Table 2 and 3, and there is a limitation that the terminal symbol, i.e., at least one of images to be input to the tree structure processing program is an optical flow image OF.

In the mutation means, modification thereof is prohibited even when the optical flow image OF is modified to input images t, t-1 and t-2 or the like by modification of the terminal symbol and the optical flow image OF is not included in the terminal symbol of the processing program.

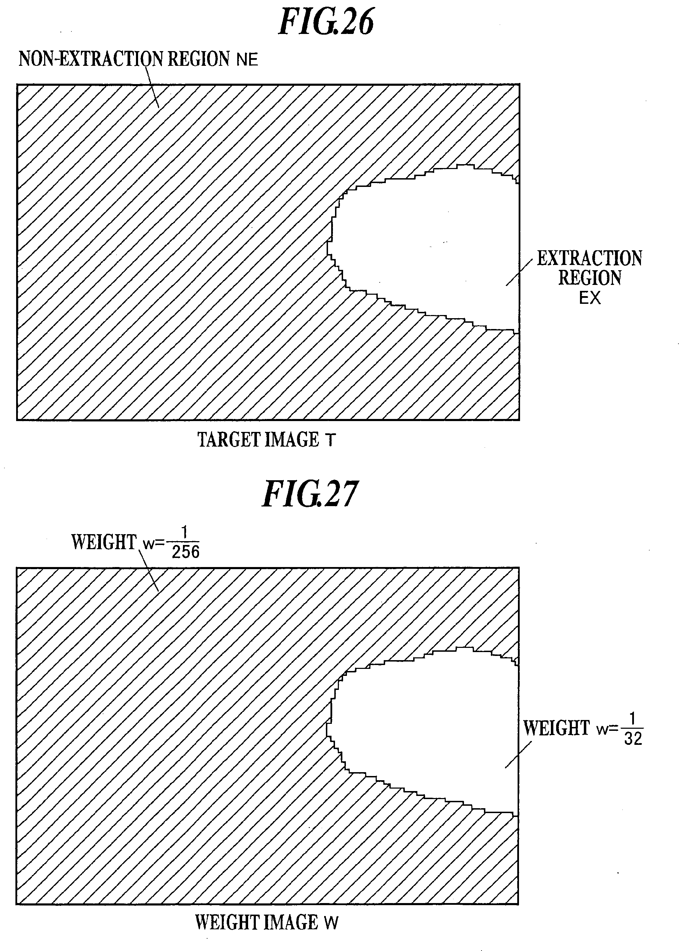

An input image as shown in FIG. 19 which is previously picked up for simulation is used for the input images t, t-1 and t-2, As the optical flow image OF, an optical flow image OF formed from the input image t and the input image t-1 is used. In this embodiment, the target image T and the weight image W shown in FIGS. 26 and 27 which are prepared and input in the same manner as that of the first embodiment are used. In this embodiment also, three learning sets S1 to S3 shown in FIG. 11 of the first embodiment are used.

In this embodiment also, the termination determining means determines whether the number of generations in the process of evolution reaches the number Ge of preset termination generation, and if it is determined that the number of generations in the process of evolution reaches the number Ge of preset termination generation, the processing program BP in which the fitness E is maximum is output to the image processing section 13 as solution, and the program forming operation is completed.

Here, generation of excessive learning is avoided in the same manner as that of the first embodiment.

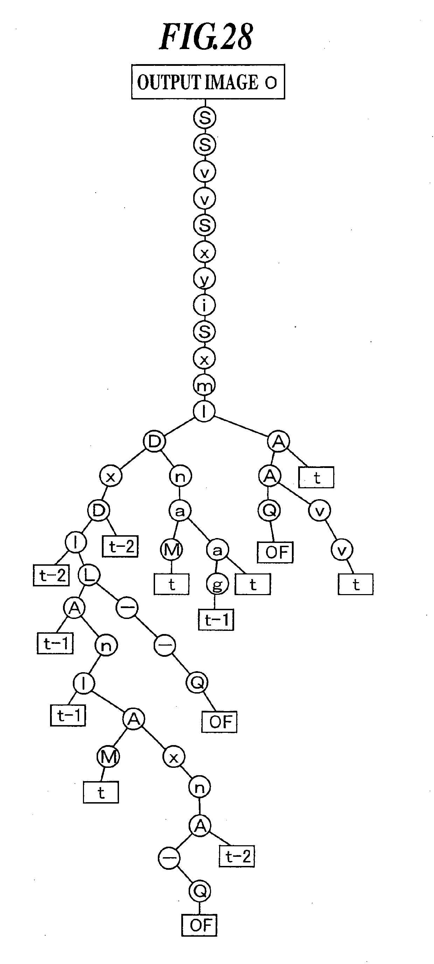

The optimized processing program BP formed by the processing program forming section 16 is sent to the image processing section 13 and stored in the memory 15. One example of the processing program BP formed by the processing program forming section 16 is shown in FIG. 28. The number of non-terminal symbols, i.e., the image filters F is 40, the number of input images t, t-1 and t-2 of the terminal symbol is 11, the number of optical flow images OF is 3, and the number of output images O is 1. In the drawing, a symbol OF represents the optical flow image, and symbols t, t-1 and t-2 respectively represent input images t, t-1 and t-2.

Next, operation of the image processor 11 of the embodiment will be explained.

In the image processor 11, first, the processing program BP is formed. In the forming stage of the processing program BP, an image of forward landscape of a subject vehicle which is a base of formation of the processing program is picked up as dynamic images by the imaging apparatus 21, i.e., as a plurality of frames picked up every 1/30 seconds, and they are stored in the memory 15 through the image processing section 13. In this embodiment, since an object to be extracted is an oncoming vehicle, dynamic images in which the oncoming vehicle is picked up are stored.

Next, the number of input images to be input to the processing program, a frame distance, i.e., the k and M are set. When k is set to 2 and M is set to 1 as in this embodiment, appropriate three continuous frames in which the oncoming vehicle that should become the input images t, t-1 and t-2 are selected from the frames stored in the memory 15 as shown in FIG. 21, and they are input to the processing program forming section 16 as the input images t, t-1 and t-2.

A target image T and a weight image W as shown in FIGS. 26 and 27 are prepared based on a selected input image t as shown in FIG. 19 and they are input to the processing program forming section 16. In this embodiment, the input image t is displayed on the monitor of the display section 14, the keyboard and the mouse of the input section 17 are operated and the target image T and the weight image W are manually prepared. The input images t and t-1 are input to the image processing section 13, the optical flow image OF as shown in FIG. 23 is produced, and it is input to the processing program forming section 16. The optical flow image OF may be produced manually.

In this embodiment, the optimized processing program BP is produced using the plurality of learning sets S1 to S3. Therefore, the same second learning set S2 such as an input image ta at time ta before time t corresponding to the input image t, and the same third learning set S3 such as an input image tb at time tb after the time t are formed and input to the processing program forming section 16.

A set value q of the number of initial populations in the initial population producing means and the number Ge of termination generations in termination determining means 57 are input to the processing program forming section 16. The processing program forming section 16 produces initial population of the processing program using various image filters F shown in Tables 2 and 3, parent selection, cross, mutation and the like are caused during the process of evolution in the genetic programming, and the fitness is evaluated. In this manner, the optimized processing program BP as shown in FIG. 28 is formed. The optimized processing program BP formed in this manner is stored in the memory 15 through the image processing section 13.

At the execution stage of the image processing using the processing program, the image processing section 13 first read the processing program BP from the memory 15 and develops the same in the RAM. If the image processing section 13 receives an input image t from the imaging apparatus 21, the image processing section 13 produces an optical flow image OF from the input image t and the input image t-1, and inputs the optical flow image OF and the input images t, t-1 and t-2 to the processing program BP.

At the same time, the image processing section 13 sends the input image t to the display section 14 to display the same on the monitor, and the input image t is temporarily stored in the memory 15. If the calculation of the processing program is completed and the output image O is output, the image processing section 13 sends a result thereof to the display section 14 and as shown in FIG. 25, a red-colored output image O is superposed on the input image t which is displayed on the monitor of the display section 14 as a monochrome image and they are displayed.

According to the image processor 11 of the embodiment, like the first embodiment, the plurality of input images t, t-1, ..., t-k in the dynamic image picked up at time intervals are input to the processing program in which the image filters F are combined in tree structure. With this, functions of the various image filters F such as difference filter constituting the tree structure processing program are effectively exhibited, and a specific object can effectively extracted from the dynamic image.

The present invention proves that the ACTIT technique using the tree structure processing program constituted such as to input the same static image as that of the conventional technique can be applied even when a dynamic image is used, and the ACTIT technique can be expanded to the extraction of a specific object from the dynamic image.

In addition, according to the image processor 11 of the embodiment, all of the effects of the image processor 1 of the first embodiment can be exhibited.

In addition to the plurality of landscape images picked up by the imaging apparatus as input images, the optical flow image OF produced by these images are input. With this, in a state where a region on an image corresponding to a moving object indicating a specific flow in the dynamic image is made clearer, it can be given to the processing program. Thus, when the specific object to be extracted from the dynamic image is a moving object, a processing program for extracting a specific object can reliably and precisely be formed.

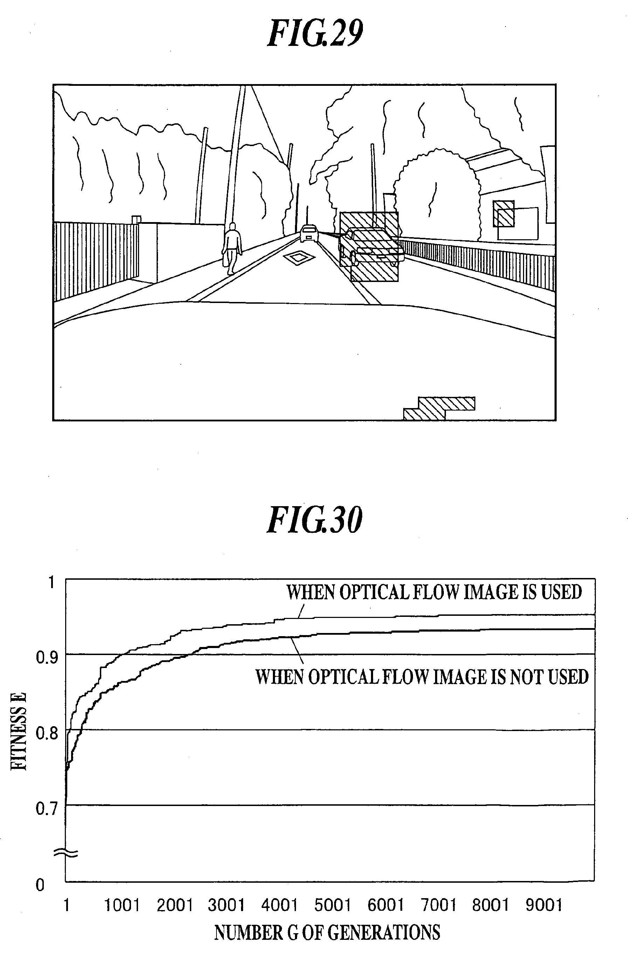

FIG. 29 shows a result of the learned and optimized processing program of the embodiment applied to a non-learned dynamic image in which the forward landscape of a vehicle is picked up. According to the image processor 11 of the embodiment, a moving object can reliably be extracted from a non-learned dynamic image which is not used for forming the processing program.

In the processing program forming section 16, if a processing program BP is automatically formed by genetic programming, the processing program BP can easily be obtained. If the target image T and the weight image W are changed, a specific object to be extracted can easily be changed.

That is, unlike the conventional technique, it is unnecessary to manually construct a predetermined for extraction whenever the specific object is changed. The processing program BP can be constructed by the same procedure while using the method using the above-described genetic programming as it is only by changing the target image T and weight image W, inputting them to the processing program forming section 16, and by producing and inputting the optical flow image OF. Therefore, the processing program BP can easily be obtained and at the same time, a general image processor can be obtained.

The optical flow image OF is input as an input image of the processing program. With this, as compared with a case in which the optical flow image OF is not used as the input image as shown in FIG. 30, e.g., as compared with a case in which only the input images t, t-1, ..., t-k are input (graph in a lower side of the drawing), it was confirmed that there was a secondary effect that the fitness E of the processing program BP in the genetic programming is more swiftly enhanced as the number G of generations is increased. It is conceived that this is because since the optical flow image OF in which a region corresponding to the moving object indicating specific flow is more clearly indicated in the dynamic image is input to the present invention, the processing program can easily form the output image O close to the target image T having the extraction region.

If a processing program for extracting an oncoming vehicle from a dynamic image as in this embodiment and a processing program formed for processing other object, such as a processing program for extracting a front vehicle or a processing program for extracting a pedestrian as in the first embodiment are combined, it is possible to obtain a large scale processing program capable of achieving a wider object.

Third Embodiment

The third embodiment is different from the second embodiment in that an image after the conversion processing is input as input images t, t-1, ..., t-k to be input to the processing program, instead of inputting a picked up image of a front landscape of the subject vehicle picked up by the imaging apparatus 21 as described in the second embodiment as it is or inputting a compressed image.

Therefore, in this embodiment, the optical flow image is also produced based on the input images t, t-1 after the conversion processing and is input to the processing program. Images corresponding to the input images t, t-1 after the conversion processing are used as a target image T and a weight image W used when forming a processing program BP which is optimized using the genetic programming technique by the processing program forming section 16.

In this embodiment, an input image after the conversion processing is called a converted image. Structures of the image processor 11, the processing program forming section 16 and the tree structure processing program are the same as those of the second embodiment shown in FIGS. 18 and 20, the processing contents in the image processor 11 and the processing contents of genetic programming in the processing program forming section 16 are also the same and thus, explanation thereof will be omitted, and the same symbols as those of the second embodiment will be used.

In this embodiment also, a case in which k is set to 2 and M is set to 1, i.e., a case in which an input image t at the current time t as shown in FIG. 21 and input images t-1 and t-2 of two continuous frames immediately before the input image t are input as the converted images t', t-1' and t-2' respectively to the processing program will be explained.

In this embodiment, the image processing section 13 of the image processor 11 converts input images t, t-1 and t-2 sent from the imaging apparatus 121 into images as viewed from above in a pseudo manner, i.e., converts the images such that the vantage point is set upward. A principle of conversion will be explained below.

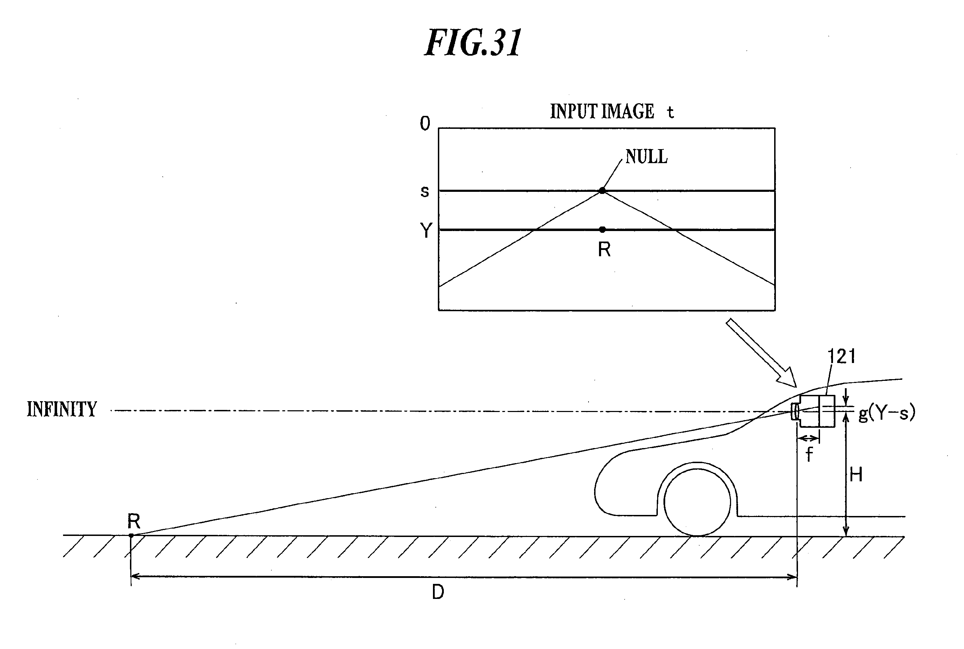

FIG. 31 is a diagram used for explaining a shooting principle of an image in the imaging apparatus. The input image t as shown in FIG. 19 is picked up based on the shooting principle shown in FIG. 31. That is, a focal length of the imaging apparatus 121 is defined as f, a mounting height of the imaging apparatus 121 is defined as H, and a distance to a point R on a horizontal road surface is defined as D. A j coordinate of a null in the input image t is defined as s, and a j coordinate of the point R picked up in the input image t is defined as Y. A symbol g represents a conversion ratio between a distance between picture elements and the actual distance.

At that time, the following Equation (5) is established.

$$H/D = g(Y\text{-}s)/f \qquad\qquad .....(5).$$

If the Equation (5) is defined,

$$D = Hf/g(Y\text{-}s) \qquad\qquad .....(6)$$

is obtained.

That is, the input image t is used as a basic image for conversion, and D is obtained based on the Equation (6) from the j coordinate Y of the point R in the input image t. With this, a distance D to the point R on the actual road surface can be obtained. Not only the distance D in the longitudinal direction as viewed from the distance D, i.e., from the subject vehicle, but also a distance in the lateral direction as viewed from the subject vehicle (distance d, hereinafter) can also be converted in the same manner.

A gradation value of a picture element indicative of a point R in the input image t is indicated on a d-D plane after conversion where a left upper end is an origin, a horizontal axis is a distance d in the lateral direction and a vertical axis is a distance D in the longitudinal direction. With this, a converted image t' having a gradation value in each picture element in a state as viewed from above in the pseudo manner can be obtained.

This conversion in this case is carried out on the assumption that the road surface is horizontal and in the image shown on the input image t, everything is on the road surface even through it has a height in the actual case. In this manner, rough assumption is included in the conversion, and expression "pseudo manner" is used in this invention.

A result of processing of the converted image t' as viewed from above in the pseudo manner is again converted in accordance with the following relation which is inverse conversion of the Equation (6):

$$Y = s + Hf/gD \qquad\qquad ..... (7).$$

With this, the image can completely be restored to a state where a front of the subject vehicle is picked up as in the input image t shown in FIG. 19.

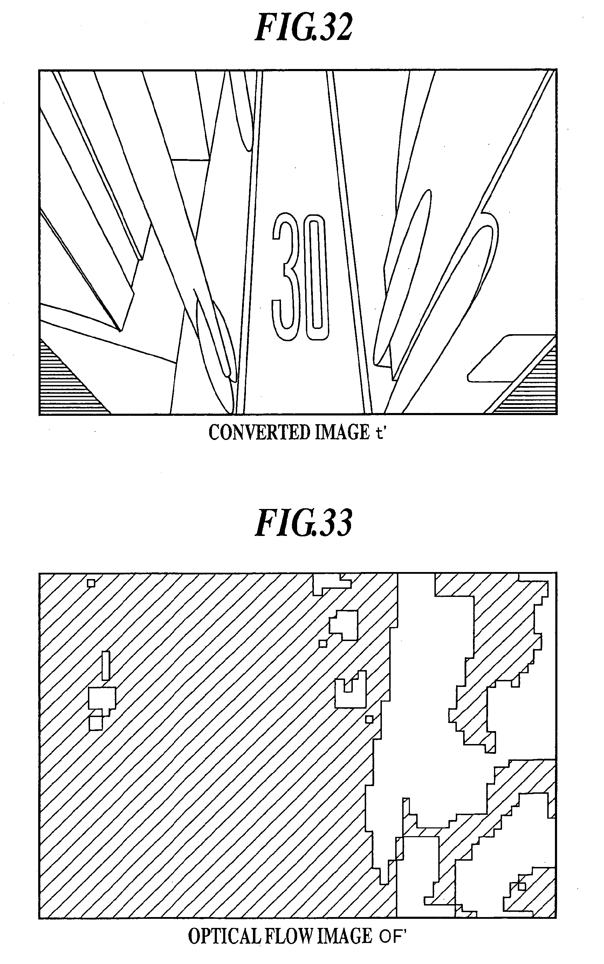

FIG. 32 shows the converted image t' which is converted and formed into a state where the input image t shown in Fig. 19 is viewed from above in the pseudo manner. As can be found from comparison with FIG. 19, the converted image t' is an image of a road as viewed from above. However, since the conversion is carried out on the assumption that even an object having height is sticked to the road surface, an oncoming truck on the right side of the FIG. 32 and a bicycle, a people, a house and the like on the left side of the drawing are expanded long on the image. The right lower corner and the left lower corner in FIG. 32 are not converted from the input image t.

If an optical flow image OF' is produced from the converted image t' and a converted image t-1' (not shown) in the same manner as that of the second embodiment, the optical flow image OF' becomes an image as shown in FIG. 33. Also in the optical flow image OF' shown in FIG. 33, like the optical flow image OF in FIG. 23, a hollow picture element block portion having a gradation value that is not 0 is color-coded in light and dark with a gradation value corresponding to the size of the optical flow in the actual case.

In the execution stage of the processing program in the image processing section 13, the image processing section 13 converts the input image t sent from the imaging apparatus 21 into the converted image t', produces the optical flow image OF' from the converted image t' and the converted image t-1' which has already been converted, and inputs the converted image t', t-1' and t-2' and the optical flow image OF' to the processing program.

Then, it is converted in a reversed manner of the Equation (6) wth respect to the output image O' from the processing program, i.e., by

$$Y = s + Hf/gD \qquad\qquad ..... (7),$$

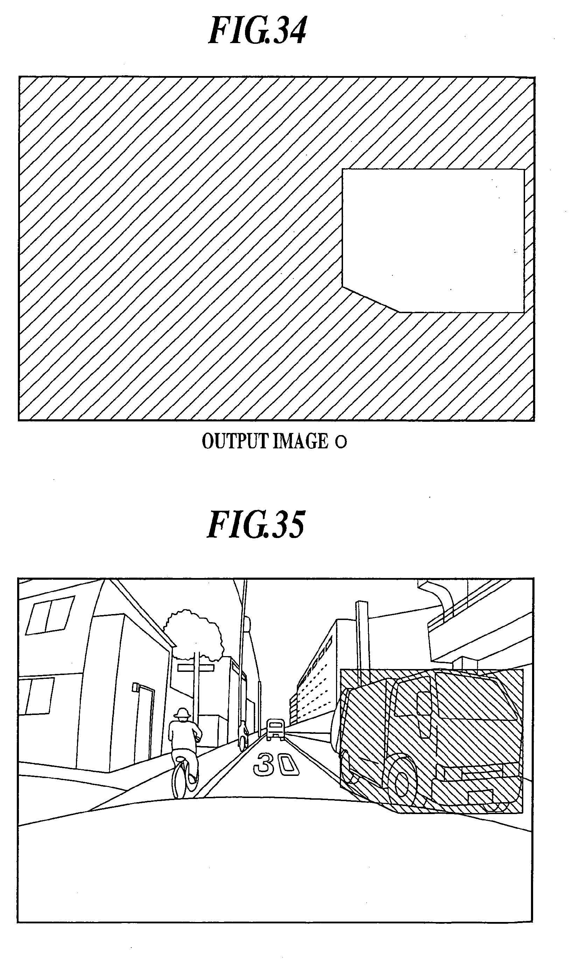

which is obtained by deforming the Equation (5), the output image O corresponding to the original input image t shown in FIG. 19 is formed. FIG. 34 shows the output image O obtained in this manner, and FIG. 35 shows an image on the monitor on which this output image O and the original input image t are superposed and displayed.

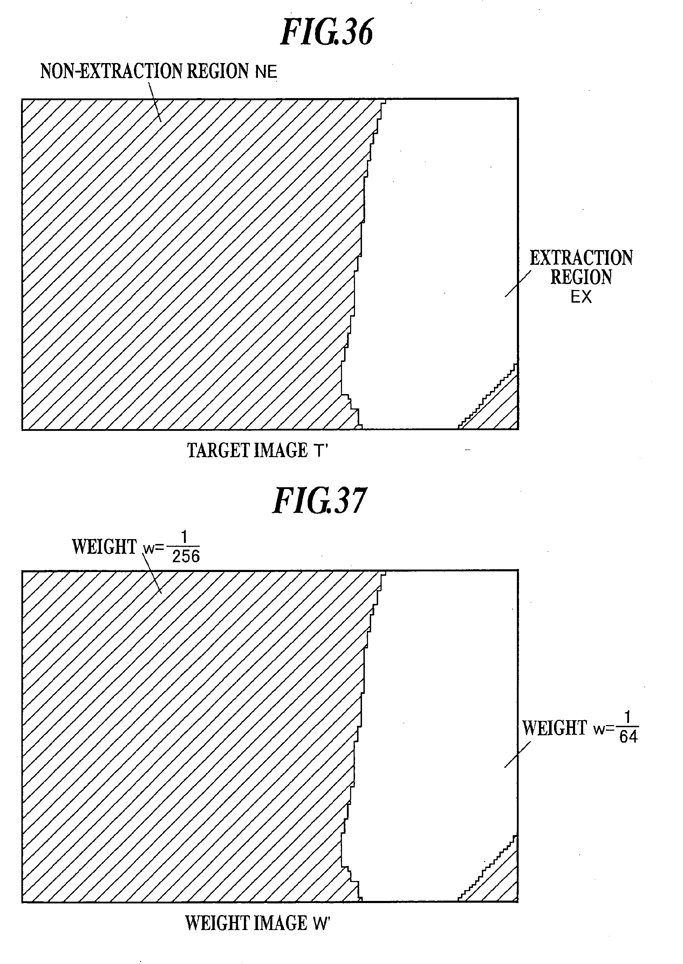

In the forming stage of the processing program BP, a target image T' as show in FIG. 36 and a weight image W' as shown in FIG. 37 are formed on the base of the converted image t' as shown in FIG. 32, and they are input to the processing program forming section 16. At the same time, the converted image t', t-1' and t-2' and the optical flow image OF' are input. A processing program BP optimized by the genetic programming is formed like the second embodiment.

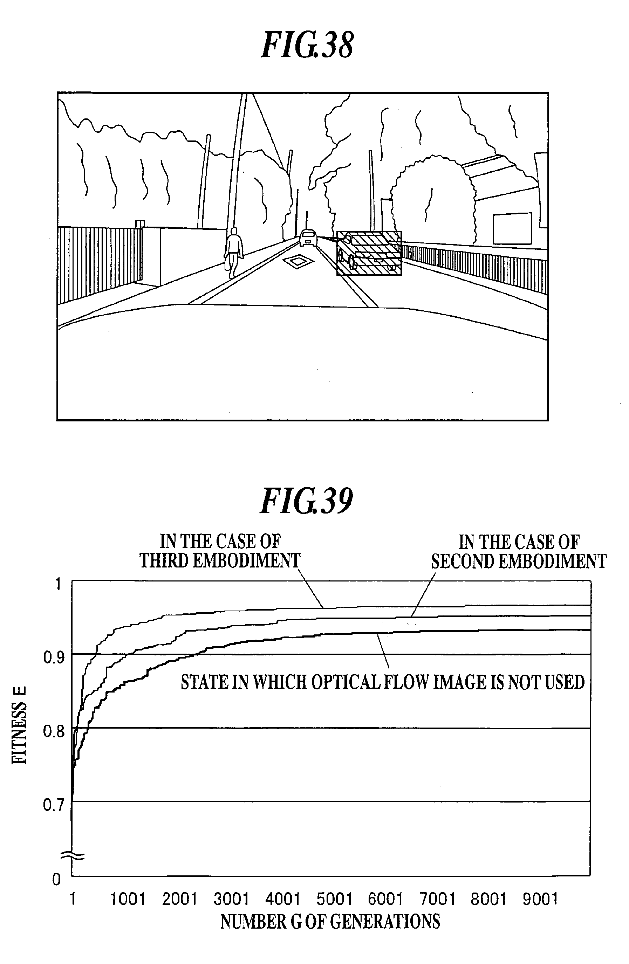

A result of processing by the processing program BP which is formed and optimized in this manner is as shown in FIGS. 34 and 35. If this is applied to a non-learned dynamic image in which the forward landscape of the vehicle is picked up, a result as shown in FIG. 38 can be obtained. The fitness E is varied as shown in FIG. 39 with the increase in the number G of generations in the process of evolution of the processing program in the processing program forming section 16.

That is, if the converted images t', t-1', ..., t-k' and the optical flow image OF' were input as input images of the processing program, it was confirmed that there was a secondary effect that the fitness E of the processing program BP in the genetic programming was swiftly enhanced as the number G of generations was increased as compared with a case in which the optical flow image was not used as the input image like the first embodiment (the lowest graph in the drawing) and a case in which the input images t, t-1, ..., t-k and the optical flow image OF were input (second graph from below in the drawing).

According to the image processor 11 of the embodiment, as described above, the same effect as that of the second embodiment can be obtained.

As shown in FIG. 39, in the genetic programming in the processing program forming section 16 of the image processor 11 of the embodiment, the fitness E of the processing program is extremely swiftly enhanced as compared with the second embodiment and the first embodiment. Therefore, when the genetic programming is carried out by the processing program forming section 16 by setting a target fitness instead of designating the number of termination generations, it is possible to achieve the target fitness more swiftly, and the optimized processing program BP can be formed within shorter time.

As can be seen from comparison between FIG. 29 which is obtained by applying the optimized processing program BP formed in the second embodiment to a non-learned dynamic image and FIG. 38 which is a result of application to the non-learned dynamic image of the embodiment, so-called erroneous extractions in which other than oncoming vehicle is extracted is reduced, and excellent extraction result is obtained.

It is conceived that this is because since the converted images t', t-1' and t-2' and the optical flow image OF' based on the converted image t' which are converted into states as viewed from above in the pseudo manner are used, the moving object starts moving by a flow vector in the optical flow image OF' extremely clearly.

That is, as compared with the optical flow image OF produced from input images t and t-1 obtained by picking up the forward landscape as in the second embodiment, in the optical flow image OF' produced from the converted images t' and t-1' as viewed from above in the pseudo manner as in this embodiment, it is possible to clearly distinguish between a flow caused by a running state of a subject vehicle and a flow caused by motion of an object moving in front space of the imaging apparatus, and the moving object starts moving in the optical flow image OF' clearly. Therefore, in this embodiment, it is possible to effectively and precisely extract with respect to extraction of a moving object especially from a dynamic image.

Hence, as a modification of this embodiment, in order to more clarify a flow difference between the moving object in the optical flow image OF' and the stationary object, the flow vector F (see FIG. 22) calculated for each picture element block formed in the production of the optical flow image is converted into a moving plane of the imaging apparatus 21, i.e., a flow with respect to a road surface in this embodiment, and the optical flow image OF' can be produced.

More specifically, in this embodiment, the input image t is converted into a converted image t' in a state as viewed from above in the pseudo manner as described above. At that time, a flow with respect to a road surface is added to the flow vector F of each picture element block of the optical flow image OF' produced by the converted image t' based on a moving state of the imaging apparatus 121, i.e., a running state of a subject vehicle on which the imaging apparatus 121 is mounted.

For example, if a forward landscape is picked up in a state in which the subject vehicle is running forward, a flow vector F is calculated in a state in which a downward flow having substantially equal magnitude is added to the optical flow image OF'. If a landscape is picked up in a state in which the subject vehicle is turning leftward, the flow vector F is calculated in a state in which a rightward flow is added to the optical flow image OF'.

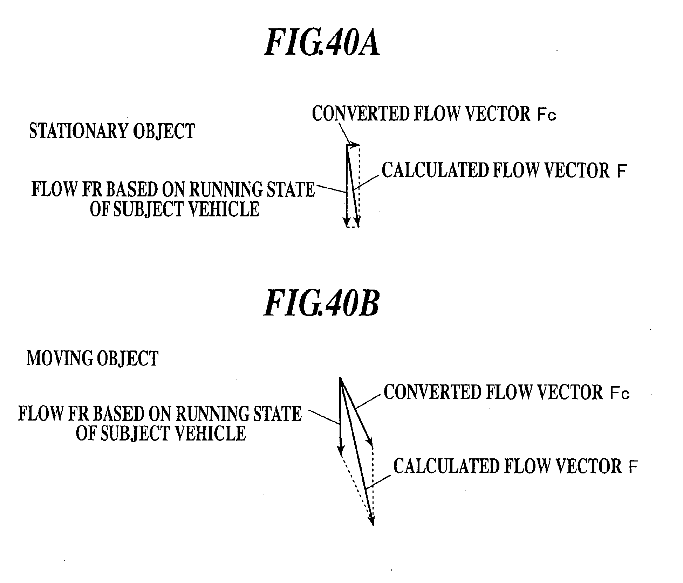

Therefore, speed or yaw rate is measured by a vehicle speed sensor or a yaw rate sensor, a flow is calculated based on a running state of the subject vehicle based on the measured value, and as in a case of the stationary object shown in FIG. 40A or a case of moving object shown in FIG. 40B, and a flow Fr based on the running state of the subject vehicle is subtracted from the already calculated flow vector F. With this, the flow vector F of each picture element block of the optical flow image OF' can be converted into a flow vector Fc with respect to the moving plane.

The already calculated flow vector F is converted into the flow vector Fc for each picture element block. With this, it becomes possible to clearly distinguish between the moving object and the stationary object, and in this image, the modified optical flow image OF' can reliably recognize the moving object. If such an optical flow image OF' is used, the moving object can more precisely be extracted from a dynamic image.

As another modification of this embodiment, instead of producing the optical flow image OF' by color-coding each picture element block in the light and dark manner with the gradation value corresponding to the magnitude of the flow vector F calculated as in this embodiment or converted flow vector Fc, it is also possible to produce the optical flow image OF' in correspondence with information of direction of the calculated flow vector F or the converted flow vector Fc.

For example, attention is paid to a j component of the flow vector F calculated from the converted images t' and t-1' or the converted flow vector Fc, i.e., a vertical component in the optical flow image OF', when the j component is 0 or lower, i.e., it is separated away from the subject vehicle, the gradation value of the picture element block is set to 0, and when the j component is a positive value, i.e., when it is opposed to the subject vehicle, the gradation value corresponding to the j component is allocated to the picture element block. With this, it is possible to obtain an optical flow image OF' suitable for extracting an oncoming vehicle.

Especially, if attention is paid to the j component of the flow vector Fc converted to a flow with respect to the road surface, an oncoming vehicle can be extracted more clearly.

If the optical flow image OF' has the gradation value only when the j component of the converted flow vector Fc has a negative value, this is suitable for extracting a forward vehicle. If attention is paid to i components of the flow vectors F and Fc, i.e., a lateral component in the optical flow image OF', it is possible to obtain an optical flow image OF' suitable for extracting a pedestrian crossing a road.

These modifications can be applied to the image processor 11 of the second embodiment.

All disclosure of Japanese Patent Application No.2004-373 452 filed on December 24, 2004 and all disclosure of Japanese Patent Application No.2005-101273 filed on March 31, 2005 are incorporated in this application.

Industrial Applicability

The image processor of the present invention is effective as an image processor to be mounted on various vehicles such as a passenger vehicle, a bus, a truck and a trailer or an artificial intelligent robot and a monitoring apparatus having a camera. The image processor of the invention is suitable for securing safety in operation for extracting a specific object from an image in a vehicle to avoid collision, to found other moving objects while observing an environment using the camera of the robot, to measure the moving object, to determine the action of the robot with respect to the moving object, or the monitoring apparatus having the camera finds a moving object and monitors the same and gives an alarm.

Explanation of Reference Numerals

| | |
|---|---|
| 1,11 | image processor |
| 21, 121 | imaging apparatus |
| 3, 13 | image processing section |
| 4, 14 | display section |
| 6, 16 | processing program forming section |
| BP | processing program |
| F | image filter |
| t, t-1, ..., t-k | input image |
| t', t-1', ..., t-k' | converted image |
| O | output image |
| T | target image |
| W | weight image |
| OF, OF' | optical flow image |
| F | flow vector |
| EX | extraction region |
| NE | non-extraction region |
| S | learning set |
| E | fitness |
| G | number of generations |

**Claims**

1. An image processor for subjecting an image picked up by an imaging apparatus to image processing to extract a specific object from the image, the image processor comprising:

   an image processing section which subjects a plurality kinds of images picked up by the imaging apparatus to the image processing based on a processing program comprising image filters combined in a form of a tree structure, and which forms an output image in which the specific object is extracted,
   wherein the plurality kinds of images constituting a plurality of dynamic images picked up by the imaging apparatus at time intervals.

2. The image processor of claim 1, further comprising a processing program forming section for forming the processing program, wherein the processing program forming section forms the processing program by genetic programming using the plurality kinds of images, a target image and a weight image.

3. The image processor of claim 2, wherein a ratio of a weight of an extraction region of the weight image and a weight of a non-extraction region of the weight image is set to be a ratio of reciprocal of an area ratio of the extraction region and the non-extraction region.

4. The image processor of claim 2 or 3, wherein the processing program forming section forms the processing program using a plurality of sets of the plurality kinds of images, the target image and the weight image.

5. The image processor of any one of claims 2 to 4, wherein fitness used for genetic programming at the processing program forming section is calculated such that it becomes smaller as the number of nodes in the processing program is greater.

6. The image processor of claim 5, wherein a rate of the number of nodes to the fitness is varied in accordance with the number of generations in a process of evolution in the genetic programming.

7. The image processor of any one of claims 2 to 6, wherein fitness used for genetic programming at the processing program forming section is calculated such that it becomes greater as the number of nodes of a two-input image filter in the processing program is greater.

8. The image processor of claim 7, wherein a rate of the number of nodes of the two-input image filter to the fitness is varied in accordance with the number of generations in the process of evolution in the genetic programming.

9. The image processor of any one of claims 1 to 8, wherein the processing program comprises a combination of a plurality of processing programs.

10. The image processor of claim 9, wherein the output image is formed by superposing non-linear shapes of processing of the plurality of processing programs.

11. The image processor of any one of claims 1 to 10, wherein a mask filter is included in the image filter.

12. The image processor of any one of claims 1 to 11, further comprising a display section for displaying an image, wherein an output image formed based on the processing program is superposed on the input image displayed on the display section and displayed.

13. The image processor of claim 1, wherein the image processing section subjects, to the image processing, a plurality of images constituting a dynamic image picked up by the imaging apparatus and an optical flow image produced from these images based on the processing program comprising image filters combined in a form of a tree structure.

14. The image processor of claim 13, further comprising a processing program forming section for forming the processing program, wherein the processing program forming section outputs a processing program optimized by genetic programming using the plurality of images, an optical flow image, a target image and a weight image.

15. The image processor of claim 13, wherein the image processing section converts the plurality of images picked up by the imaging apparatus into images of a state viewed from above in a pseudo manner.

16. The image processor of claim 15, wherein the image processing section inputs, to the processing program, the plurality of converted images and an optical flow image produced based on the plurality of converted images.

17. The image processor of claim 15, wherein the processing program forming section carries out learning by genetic programming using the plurality of converted images, an optical flow image, a target image and a weight image produced based on the plurality of converted images, and outputs an optimized processing program.

18. The image processor of claim 13, wherein the optical flow image is an image on which information of magnitude of calculated flow is expressed as a gradation value.

19. The image processor of claim 13, wherein the optical flow image is an image on which information of a direction of calculated flow is expressed as a gradation value.

20. The image processor of claim 18, wherein the flow in the optical flow image is a flow with respect to a moving plane of the imaging apparatus calculated based on moving state of the imaging apparatus.

21. The image processor of claim 13, wherein in the optical flow image, a gradation value of a picture element portion where reliability of calculated flow is low is set to 0.

22. The image processor of claim 13, wherein the image processing section converts the plurality of images picked up by the imaging apparatus into a state in which a vantage point is moved upward.

# FIG.1

```
        4                              7                    1
   ┌──────────┐              ┌──────────┐
   │ DISPLAY  │              │  INPUT   │
   │ SECTION  │              │ SECTION  │
   └──────────┘              └──────────┘

2                        ┌──────────────┐        ┌──────────────┐
                         │    IMAGE     │        │ PROCESSING   │        6
   ┌───┐                 │ PROCESSING   │        │  PROGRAM     │
   │   │                 │  SECTION     │        │  FORMING     │
   └───┘                 └──────────────┘        │  SECTION     │
  21                                             └──────────────┘
                                                        3
                         ┌──────────┐
                         │  MEMORY  │
                         └──────────┘
               5
```

# FIG.2

OUTPUT IMAGE
O

F8

F6        F7

F3        F4        F5

INPUT IMAGE
t-1        F1        INPUT IMAGE
t        F2

INPUT IMAGE
t        INPUT IMAGE
t-3        INPUT IMAGE
t-2        INPUT IMAGE
t

◯ : IMAGE FILTER

26

# FIG.3A

M=1

t    t-1   t-2   t-3

# FIG.3B

M=3

t

t-1

t-2

# FIG.4A

INPUT IMAGE t

# FIG.4B

INPUT IMAGE t-3

## *FIG.5*

OUTPUT IMAGE O

## *FIG.6*

## FIG.7A

## FIG.7B

## FIG.7C

## FIG.7D

## FIG.7E

## FIG.7F

# FIG.8

SET VALUES k, M, q

6

INITIAL POPULATION PRODUCING MEANS — 61

67 TERMINATION DETERMINING MEANS

66 FITNESS EVALUATING MEANS

65 MUTATION MEANS

64 CROSS MEANS

63 PARENT SELECTING MEANS

62 FITNESS EVALUATING MEANS

NUMBER Ge OF TERMINATION GENERATIONS

INPUT IMAGES t,t−1,t−2,t−3
TARGET IMAGE T
WEIGHT IMAGE W

PROCESSING PROGRAM BP

EP 1 830 320 A1

## FIG.9

EXTRACTION
REGION
EX

NON-EXTRACTION
REGION
NE

TARGET IMAGE T

## FIG.10

WEIGHT w= $\frac{1}{12}$

WEIGHT w= $\frac{1}{256}$

WEIGHT IMAGE W

# FIG.11

THIRD LEARNING SET S3   FIRST LEARNING SET S1

tb           t

ta

SECOND LEARNING SET S2

# FIG.12A

INPUT IMAGE ta

# FIG.12B

INPUT IMAGE tb

# FIG.13

PARENT PROGRAM 1          PARENT PROGRAM 2

CROSS

CHILD PROGRAM 1          CHILD PROGRAM 2

# FIG.14

OUTPUT IMAGE O

PROCESSING 1  PROCESSING 2  PROCESSING 3  PROCESSING 4  ...

INPUT IMAGE  INPUT IMAGE  INPUT IMAGE  INPUT IMAGE

# FIG.15

OUTPUT IMAGE O

PORTION WHERE
PROCESSING 2 IS CARRIED OUT

PORTION WHERE
PROCESSING 1 IS CARRIED OUT

SUM

PROCESSING 1

PROCESSING 2

INPUT
IMAGE

INPUT
IMAGE

# FIG.16

## FIG.17A

## FIG.17B

## FIG.18

14 — DISPLAY SECTION

17 — INPUT SECTION

11

12

121

IMAGE PROCESSING SECTION

PROCESSING PROGRAM FORMING SECTION — 16

13

15 — MEMORY

## FIG.19

INPUT IMAGE t

# FIG.20

○ : IMAGE FILTER

# FIG.21

# FIG.22

INPUT IMAGE t

INPUT IMAGE t-1

# FIG.23

OPTICAL FLOW IMAGE OF

## FIG.24

OUTPUT IMAGE O

## FIG.25

## *FIG.26*

NON-EXTRACTION REGION NE

EXTRACTION
REGION
EX

TARGET IMAGE T

## *FIG.27*

WEIGHT $w=\dfrac{1}{256}$

WEIGHT $w=\dfrac{1}{32}$

WEIGHT IMAGE W

# FIG.28

## FIG.29

## FIG.30

# FIG.31

INPUT IMAGE  t

## FIG.32

CONVERTED IMAGE t'

## FIG.33

OPTICAL FLOW IMAGE OF'

EP 1 830 320 A1

# FIG.34

OUTPUT IMAGE O

# FIG.35

## FIG.36

NON-EXTRACTION REGION NE

EXTRACTION
REGION
EX

TARGET IMAGE T'

## FIG.37

WEIGHT $w = \dfrac{1}{256}$

WEIGHT $w = \dfrac{1}{64}$

WEIGHT IMAGE W'

## FIG.38

## FIG.39

IN THE CASE OF
THIRD EMBODIMENT

IN THE CASE OF
SECOND EMBODIMENT

STATE IN WHICH OPTICAL FLOW IMAGE IS NOT USED

FITNESS E

NUMBER G OF GENERATIONS

## FIG.40A

STATIONARY OBJECT

CONVERTED FLOW VECTOR Fc

FLOW FR BASED ON RUNNING STATE
OF SUBJECT VEHICLE

CALCULATED FLOW VECTOR F

## FIG.40B

MOVING OBJECT

FLOW FR BASED ON RUNNING STATE
OF SUBJECT VEHICLE

CONVERTED FLOW VECTOR Fc

CALCULATED FLOW VECTOR F

# *FIG.41*

OUTPUT IMAGE O

F8

F6    F7

F3    F4    F5

INPUT IMAGE I    F1    INPUT IMAGE I    F2

INPUT IMAGE I    INPUT IMAGE I    INPUT IMAGE I    INPUT IMAGE I

◯ : IMAGE FILTER

## INTERNATIONAL SEARCH REPORT

| International application No. |
|---|
| PCT/JP2005/023595 |

A.  CLASSIFICATION OF SUBJECT MATTER
*G06T5/00*(2006.01), *G06T1/00*(2006.01), *G06T7/20*(2006.01)

According to International Patent Classification (IPC) or to both national classification and IPC

B.  FIELDS SEARCHED

Minimum documentation searched (classification system followed by classification symbols)
G06T1/00, G06T5/00, G06T7/20

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPLUS(JOIS)

C.  DOCUMENTS CONSIDERED TO BE RELEVANT

| Category* | Citation of document, with indication, where appropriate, of the relevant passages | Relevant to claim No. |
|---|---|---|
| A | Tomoharu NAGAO, "Shinkateki Gazo Shori", Gazo Media Shori Symposium (IMPS2002) Dai 7 Kai Symposium Shiryo, 11 November, 2002 (11.11.02), pages 1 to 8 | 1-22 |
| A | Toshiyuki ASAKURA, Yasuomi IIDA, Takeki TAKEYAMA, "GA o Mochiita Ninshiki Jokei Dogazo kara no Kotsu Shingo Ninshiki", Memories of the Faculty of Engineering, University of Fukui, 31 March, 2003 (31.03.03), Vol.51, No.1, pages 7 to 14 | 1-22 |
| A | JP 2002-288669 A  (Eastman Kodak Co.), 04 October, 2002 (04.10.02), Full text; all drawings & EP 1220531 A1      & US 2002/122067 A1 | 1-22 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 February, 2006 (02.02.06) | 14 February, 2006 (14.02.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

| International application No. |
| --- |
| PCT/JP2005/023595 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-150297 A  (Nippon Telegraph And Telephone Corp.), 24 May, 2002 (24.05.02), Full text; all drawings (Family: none) | 1-22 |

Form PCT/ISA/210 (continuation of second sheet) (April 2005)

**EP 1 830 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002083297 A
- JP 2001084383 A
- JP H9271014 A
- JP 2004373452 A
- JP 2005101273 A